(19) Europäisches Patentamt
European Patent Office
Office européen des brevets

(11) EP 3 412 356 B1

(12) **EUROPEAN PATENT SPECIFICATION**

(45) Date of publication and mention of the grant of the patent:
**19.08.2020 Bulletin 2020/34**

(51) Int Cl.:
***B01D 53/14*** *(2006.01)* ***B01D 53/22*** *(2006.01)*

(21) Application number: **18176549.6**

(22) Date of filing: **07.06.2018**

(54) **METHOD FOR CO2 CAPTURE WITH A MEMBRANE CONTACTOR**

VERFAHREN ZUR CO2-ABSCHEIDUNG MIT EINEM MEMBRANKONTAKTOR

PROCÉDÉ DE CAPTURE DE CO2 AVEC UN CONTACTEUR À MEMBRANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2017 EP 17174652**

(43) Date of publication of application:
**12.12.2018 Bulletin 2018/50**

(73) Proprietors:
- **SOLVAY SA**
  **1120 Brussels (BE)**
- **Centre National de la Recherche Scientifique**
  **75794 Paris Cedex 16 (FR)**
- **Université de Lorraine**
  **54052 Nancy Cedex (FR)**

(72) Inventors:
- **RODE, Sabine, Elise**
  **54220 Malzéville (FR)**
- **VILLENEUVE, Kévin**
  **32810 Preignan (FR)**
- **ROIZARD, Denis, Gilles**
  **54710 Ludres (FR)**
- **SAVARY, David, Jean, Lucien**
  **69360 Sérézin-du-Rhône (FR)**
- **COQUEREL, Jean-Paul**
  **54950 Saint-Clément (FR)**
- **CHAUDRON, Valéry, Marie**
  **55250 Nubecourt (FR)**

(74) Representative: **Gevers & Orès**
**Immeuble le Palatin 2**
**3 Cours du Triangle**
**CS 80165**
**92939 Paris La Défense Cedex (FR)**

(56) References cited:
**WO-A1-2016/162518** **FR-A1- 2 993 787**
**US-A1- 2008 276 803** **US-A1- 2011 052 466**

EP 3 412 356 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The invention relates to an improved method for $CO_2$ capture from a gas stream, using a membrane that is permeable to $CO_2$, and using aqueous solution comprising ammonia ($NH_3$). It also relates to an improved method to use a membrane contactor such as Hollow fiber Membrane Contactor (HFMC) or Spiral Membrane Contactor or Plate and Frame Membrane Contactor.

### Background of the invention

The global warming is mainly due, according to the World Meteorological Organization, to anthropogenic greenhouse gas emissions, mostly carbon dioxide [1]. Carbon Capture and Storage (CCS) is one of the solution accounted by the International Energy Agency in order to reduce the impact of human activities on the world climate. It may represent between 14% and 17% of the $CO_2$ emission reduction [2].

Up to now, the most mature technology for carbon capture relies on absorbing $CO_2$ in a chemical solvent. The most reported solvent is MEA (MonoEthanolAmine). Once carbon dioxide has been absorbed in the solvent, the latter is regenerated by heating. The $CO_2$ capture may be responsible for about 13 % of the energy penalty of thermal power plants, mostly due to solvent regeneration step [3]. In order to reduce it, other solvents are currently studied. Ammonia is a promising alternative and is already used in industrial pilot plant demonstrators (Powerspan [4], Alstom [5]). Alstom planned the commercialization of the Chilled Ammonia Process (CAP) by 2020 [7]. Indeed, ammonia requires less energy for the regeneration than MEA. It is also cheap, non-corrosive, and stable. It can insure the simultaneous absorption of multiple acid pollutants [6]. However, the development of the ammonia process suffers from the high volatility of ammonia and the lower kinetic rate when compared to MEA. To handle the volatility issue of ammonia which leads to additional expenses for ammonia make-up and gas treatment, the absorption of $CO_2$ is performed with chilled aqueous solution in the CAP (Alstom [5]) which, also, leads to additional energetic expenses.

Typically, packed column insures the direct contact between the flue gas and the solvent. Hollow fiber Membrane Contactor (HFMC) is presented as a promising technology in order to reduce the size of the unit because of the larger interfacial area provided (from 5 000 to 20 000 $m^2/m^3$) compared with conventional packing (500 $m^2/m^3$) even if the membrane increases the mass transfer resistance [8]. As the membrane separates the two phases, liquid and gas, the technology does not suffer from flooding or foaming [9].

Typically microporous membranes are used for the gas-liquid absorption in membrane contactor but this type of membrane suffers from wetting phenomena. Long time scale experiments show an increase of the mass transfer resistance of the membrane as function of time due to the penetration of the solvent inside the pores of the membrane [10]. The diffusion of carbon dioxide in solvent filled pores is obviously lower than in empty pores. Therefore, the use of thin dense film composite membranes has been proposed to improve long operation durations of membrane contactors: a thin dense layer supported by the microporous membrane. The dense layer is thin enough to obtain close values of the mass transfer coefficients of the coated and the not coated membrane. For that matter, high $CO_2$ permeable dense skin is used. With this type of membrane, the microporous support wetting has not been observed when using MEA aqueous solutions [11].

So far, few authors have investigated the potential of the use of membrane contactor for the ammonia based $CO_2$ capture process [12-16], their observations are listed in Table 5. The volume reduction factor allowed by membrane contactors compared to packed columns, also known as intensification potential, is generally about 3.5 with a HFMC made of polypropylene microporous membrane [13] and 4 to 5 with commercial and in-house composite membrane [14].

Concerning, the ammonia slip, it is showed that it can be two order of magnitude below the ammonia slip with a packed column for one author [13]. The other study reports an ammonia slip between 28 to 55 kg$NH_3$/tons of $CO_2$ removed with unloaded fresh ammonia solution [14]. In comparison, the study described in present invention description, reports a value of 58 kg$NH_3$/tons of $CO_2$ for a packed column using a 0.31 mol$CO_2$/mol$NH_3$ loaded 5% wt aqueous ammonia solution. Ammonia slip from a fresh solution is higher than the one in a loaded solution, thus, the inventors suggest that the ammonia losses mitigation allowed by the membrane is effective. In the present study, two composite membrane contactors are used including one with a dense selective layer less permeable to $NH_3$ than to $CO_2$ [18]. This membrane does not reveal any improvement in the mitigation of the ammonia slip.

The experimental studies dealing with membrane contactor for the $CO_2$ absorption in aqueous ammonia reveal a rapid decrease of the $CO_2$ flux after a short time of operation. When using microporous membrane contactor, the experiments performed reveal the impossibility to reach steady state conditions during the absorption operation. It may be related to the precipitation of ammonium salts at the pore mouth of the membrane. When using a composite or a dense membrane, the $CO_2$ flux is stable during a short period but then decreases after less than one hour [12,15]. These authors suspected lumen side crystallization of ammonium salts in the gas phase. Today those unstable performances

prevent the membrane contactor ammonia based $CO_2$ capture technology to be scaled up. Further prior art is disclosed in FR 2993787 A and US 2008/0276803 A.

The present invention enables to improve sensitively the rapid decrease of the $CO_2$ flux through the membrane contactor.

The inventors have found surprisingly, that a small steam (water vapor) partial-pressure present in the gas, enables to reduce sensitively the loss of $CO_2$ transfer versus time, as presented in present description.

**Summary of the invention**

Consequently the present invention relates to a method for removing at least part of carbon dioxide ($CO_2$) from a gas stream in accordance with claim 1. Said method comprises inter alia:

using a membrane that is permeable to $CO_2$, having a first surface and a second opposing surface, said method comprising bringing the gas stream in contact with the first surface of the membrane, and bringing the second surface of the membrane with an aqueous solution comprising ammonia ($NH_3$) so that at least part of the $CO_2$ of the gas stream is removed from the gas stream and transferred through the membrane to the aqueous solution,
said method being characterized in that: the gas stream has a steam ($H_2O$) partial-pressure of at least 1200 Pa.

A first advantage of present invention is to delay sensitively the time of formation of ammonium crystals on the surface of the membrane on the side of the gas stream.

A second advantage is to delay the pressure increase to feed a membrane contactor at a determined flow rate, in particular wherein said membrane contactor presents lumen, such as hollow fiber lumen (internal diameter of fiber) or lumen between two membrane plates (thickness between two smembrane surfaces), of small dimension as a few tens of $\mu$m.

A third advantage of the present invention is to reduce regeneration time between two time slots of $CO_2$ capture operations.

A fourth advantage is two increase the time-life of such membrane before rupture avoiding high pressure constraints during operations between two capture cycles.

A fifth advantage of present invention when the gas stream comprises small size solid particles, such as soot particles from fumes, is to reduce the risks of retaining small size solid particles in small size lumen of membrane contactors.

A sixth advantage of present invention when the gas stream comprises small size solid particles, such as soot particles from fumes, is to enable less stringent characteristics of upstream de-dusting equipments before said membrane contactor.

**Brief description of the drawings**

Fig. 1 is a schematic illustration of one embodiment of present invention with a membrane contactor shaped as a tube-and-shell arrangement.

Fig. 2 is a graph illustrating dissociation pressure of ammonium carbamate and bicarbonate as a function of the temperature (correlation of the dissociation pressure of carbamate by Egan et al [23] (with P in mmHg and T in K) and experimental data [21-24]).

Fig. 3 is a graph illustrating dissociation constant of ammonium carbamate and bicarbonate as a function of temperature calculated from Equation (15) and (16).

Fig. 4 : is a schematic illustration of experimental setup : P, T and %RH stand for the manometer, the temperature sensor and the hygrometer respectively.

Fig. 5(a) and Fig. 5(b) are graphs illustrating experiment with dry inlet gas results :

(a) CO2 capture efficiency variation with time (Experiments 2 and 4 performed with a gas flow of 200 NmL/min and Experiments 5 and 7 with 133 NmL/min)
(b) Pressure measured at the gas inlet as a function of the time.

Fig. 6 is a plotted graph of pressure at the gas inlet of the contactor versus time illustrating reversibility of the fouling from possible precipitation of ammonium salts after experiment Exp.2. 170 NmL/min of nitrogen flows in the lumen whereas 10 mL/min of water circulates in the shell side at 30 °C, described in section 4.2 of present description.

Fig. 7 (a) and Fig. 7(b) : are plotted graphs from experiment with dry inlet gas results : (steam water pressure less

than 1200 Pa) :

(a) CO2 capture efficiency evolution as function of time with humid inlet gas and the same conditions as Exp. 2, 4 and 5 presented before.
(b) Pressure measured at the gas inlet for humid inlet gas experiments as a function of time.

Fig. 8 : Schematic representation of the molar flows in the membrane contactor. a) Flows of $CO_2$ and $NH_3$ from and to the gas phase. When the gas gets out the membrane contactor, the flow separates into two phases: one liquid (without solid) and gas which is analyzed with an infrared analyzer; and b) Picture of Ammonium salts saturated solution formed during an experiment.

**Definitions**

The term 'membrane' in present invention refers to a thin layer separating two mediums : one consisting of, or comprising mainly, a liquid phase as continuous medium, and a second one consisting of, or comprising mainly, a gaseous phase as continuous medium.
The expression "solution comprising ammonia ($NH_3$)" in present invention refers to an aqueous solution comprising basic ammonia ($NH_4OH$).
The expression "steam ($H_2O$)partial pressure" in present invention refers to water ($H_2O$)partial pressure, wherein the water is in gas state.
The expression "dry gas" in present invention refers to a gas wherein water ($H_2O$) partial pressure is at most 120 Pa.
The expression "saturated pressure of water at temperature T" in present invention refers to the water ($H_2O$) vapor pressure at which water vapor is in thermodynamic equilibrium with its condensed state at temperature T. The saturated water vapor pressure is function of temperature T, generally determined with Clausius-Clapeyron relation, and in present invention referred to David R. Lide, ed. (2005). CRC Handbook of Chemistry and Physics. Boca Raton, Florida : CRC Press. pages 6-8, and that may be calculated between 0 to 100°C at +/- 0.08% by the "Buck equation" :

$$P = 0.61121.\exp\left[(18.678\text{-}T/\ 234.5).(T/(257.14+T)\right]$$

where T is in °C and P is in kPa.
In the present disclosure, where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components, or any element or component recited in a list of recited elements or components may be omitted from this list. Further, it should be understood that elements and/or features of a composition, a process, or a method described herein can be combined in a variety of ways without departing from the scope and disclosures of the present teachings, whether explicit or implicit herein.
In addition, it should be understood that the elements and/or the characteristics of a composition, a method, a process or a use, described in the present specification, can be combined in all ways possible with the other elements and/or characteristics of the composition, method, process, or use, explicitly or implicitly, this being without departing from the context of the present specification.
In the passages of the present specification that will follow, various embodiments or items of implementation are defined in greater detail. Each embodiment or item of implementation thus defined can be combined with another embodiment or with another item of implementation, this being for each mode or item unless otherwise indicated or clearly incompatible when the range of the same parameter of value is not connected. In particular, any variant indicated as being preferred or advantageous can be combined with another variant or with the other variants indicated as being preferred or advantageous.
In the present specification, the description of a range of values for a variable, defined by a bottom limit, or a top limit, or by a bottom limit and a top limit, also comprises the embodiments in which the variable is chosen, respectively, within the value range : excluding the bottom limit, or excluding the top limit, or excluding the bottom limit and the top limit.
In the present specification, the description of several successive ranges of values for the same variable also comprises the description of embodiments where the variable is chosen in any other intermediate range included in the successive ranges. Thus, for example, when it is indicated that "the magnitude X is generally at least 10, advantageously at least 15", the present description also describes the embodiment where : "the magnitude X is at least 11", or also the embodiment where : "the magnitude X is at least 13.74", etc.; 11 or 13.74 being values included between 10 and 15.
The term "comprising" includes "consisting essentially of" and also "consisting of".

In the present specification, the use of "a" in the singular also comprises the plural ("some"), and vice versa, unless the context clearly indicates the contrary.

**Detailed description of the invention**

The present invention relates to a number of embodiments of the process, which are detailed hereafter.

Item 1. The method of the invention for removing at least part of carbon dioxide ($CO_2$) from a gas stream comprising *inter alia:*

using a membrane that is permeable to $CO_2$, having a first surface and a second opposing surface,
said method comprising bringing the gas stream in contact with the first surface of the membrane, and bringing the second surface of the membrane in contact with an aqueous solution comprising ammonia ($NH_3$) so that at least part of the $CO_2$ of the gas stream is removed from the gas stream and transferred through the membrane to the aqueous solution,
wherein the gas stream has a steam ($H_2O$) partial-pressure of at least 1200 Pa.

Item 2. The method of item 1 wherein the gas stream has a steam partial-pressure of at least 1500 Pa, advantageously at least 2000 Pa, or at least 3000 Pa, or at least 4000 Pa, or at least 5000 Pa, or at least 7000 Pa, or at least 9500 Pa, or at least 12000 Pa, or at least 15000 Pa, or at least 19000 Pa, or at least 25000 Pa, or at least 31000 Pa, or at least 38000 Pa, or at least 47000 Pa
Item 3. The method of items 1 or 2 wherein the gas stream is at a temperature $T_1$, and the gas stream has a steam partial-pressure of at least 15 %, advantageously at least 50 %, more advantageously at least 50 %, even more advantageously at least 70 %, even more advantageously at least 70 %, even more advantageously at least 80%, even more advantageously at least 90 %, even more advantageously at least 95 %, even more advantageously at least 98 % of the saturated pressure of water at temperature $T_1$.
Item 4. The method of the preceding item wherein the temperature $T_1$ being the temperature of the gas stream when starting to be brought in contact with the first surface of the membrane ($T_1$ may be called also "inlet gas stream temperature").
Item 5. The method of any one of items 3 or 4 wherein the gas stream has a steam partial-pressure of at most the saturated pressure of water at temperature $T_1$+30°C, preferably at most the saturated pressure of water at temperature $T_1$+20°C, more preferably at most the saturated pressure of water at temperature $T_1$+10°C, more preferably at most the saturated pressure of water at temperature $T_1$+5°C, more preferably at most the saturated pressure of water at temperature $T_1$+2°C, more preferably at most the saturated pressure of water at temperature $T_1$+1°C, even more preferably at most the saturated pressure of water at temperature $T_1$.
Item 6. The method of any one of the preceding items wherein the steam ($H_2O$) partial-pressure is steam ($H_2O$) partial-pressure when starting bringing the gas stream in contact with the first surface of the membrane.
Item 7. The method of any one of the preceding items wherein the membrane is shaped as an hollow fiber,

(a) the first surface of the membrane being the internal surface of the hollow fiber and the second surface being the external surface of the hollow fiber, or
(b) the first surface of the membrane being the external surface of the hollow fiber and the second surface being the internal surface of the hollow fiber.

Item 8. The method of item 7 wherein the membrane is shaped as a plurality of hollow fibers, said plurality of hollow fibers being preferably packaged in a tube-and-shell arrangement.
Item 9. The method of any one of items 1 to 6 wherein the membrane is shaped as a spiral membrane contactor or as a parallel-plates membrane contactor (in particular such as a plates-and-frames contactor).
Item 10. According to the invention the membrane comprises, or is made of, a polymer selected from polyene, polyalkene, polysulfone (PSU), polyethersulfone (PES), Perfluoropolymers.
Item 11. The method of the preceding item wherein the polymer is selected from polyethylene (PE), polypropylene (PP), polymethylpentene (PMP) Polytetrafluoroethylene (PTFE), Polyacrylonitrile (PAN).
Item 12. The method of any one of the preceding items wherein the membrane is a composite membrane comprising a micro-porous layer, and a dense layer.
Item 13. The method of the preceding item wherein the micro-porous layer, is made of a material in which the transport of gases relies mainly, or only, on diffusion giving rise to Knudsen selectivity for gas mixtures.
Item 14. The method of items 10 or 11, wherein dense layer, is a material in which the transport relies on both sorption and diffusion in the polymer phase able to give rise higher selectivity than Knudsen selectivity for gas mixture.

Item 15. The method of any one of items 7 or 8, or any items or 8 to 14, wherein the membrane is shaped as a hollow fiber, and said hollow fiber has an external diameter of at least 100 and/or at most 1000 $\mu$m,
Item 16. The method of the preceding item wherein the external diameter is at least 150 and/or at most 500 $\mu$m.
Item 17. The method of any one of items 5 to 6 or 8 to 15, wherein the membrane is shaped as an hollow fiber, and said hollow fiber has an internal diameter (or lumen diameter) of at least 50 and/or at most 800 $\mu$m, preferably of at least 100 and/or at most 300 $\mu$m.
Item 18. The method of any one of the preceding items wherein the membrane has an overall mass transfer coefficient of $CO_2$ at 20 °C of at least $10^{-6}$ m/s and/or at most $10^{-1}$ m/s, preferably of at least$10^{-5}$m/s and/or preferably at most $10^{-2}$m/s
Item 19. The method of any one of the preceding items wherein the dense layer has a thickness of at least 0.05$\mu$m and/or at most 20 $\mu$m, preferably of at least 0.1 $\mu$m and/or preferably at most 5 $\mu$m.
Item 20. The method of any one of the preceding items wherein the membrane is a composite membrane and has a thickness of at least 10 $\mu$m and/or at most 1000 $\mu$m, preferably of at least 30 $\mu$m and/or preferably at most 100 $\mu$m.
Item 21. The method of any one of the preceding items wherein the membrane has a plurality of micro-pores, and said micro-pores have mean diameters of at least 0.05 $\mu$m, preferably of at least 0.1 $\mu$m.
Item 22. The method of any one of the preceding item wherein said micro-pores have mean diameters of at most 5 $\mu$m, preferably of at most 0.5 $\mu$m.
Item 23. The method of any one of the preceding item wherein said micro-pores have mean diameters of at least 0.05 $\mu$m and/or at most 5 $\mu$m, preferably of at least 0.1 $\mu$m. and/or preferably at most 0.5 $\mu$m.
Item 24. According to the invention the method comprises bringing the second surface of the membrane in contact with an aqueous solution comprising ammonia ($NH_3$) at a temperature $T_2$, said temperature $T_2$ being the temperature of the aqueous solution when starting to be brought in contact with the second surface of the membrane ($T_2$ is also called "inlet aqueous solution temperature"), and wherein $T_2$ is at least 1°C, preferably at least 5°C.
Item 25. The method of any one of the preceding item wherein $T_2$ is at most or less than 50°C.
Item 26. The method of items 23 or 24 wherein $T_2$ is equal or lower than the temperature $T_1$ of the inlet gas stream.
Item 27. The method of any one of items 23 to 25 wherein $T_2$ is at most or is less than 45°C
Item 28. The method of any one of items 23 to 26 wherein $T_2$ is at most or less than 40°C.
Item 29. The method of any one of items 23 to 27 wherein $T_2$ is at most or less than 35°C.
Item 30. The method of any one of items 23 to 28 wherein $T_2$ is at most or less than 30°C.
Item 31. According to the invention the aqueous solution comprises at least 0.02 mol and/or at most 6 mol of total ammonia expressed as ammonium ion ($NH_4^+$) per liter of aqueous solution.
Item 32. According to the invention the aqueous solution comprises at least 0.02 mol and at most 6 mol of ammonium hydroxide ($NH_4OH$) per liter of aqueous solution.
Item 33. The method of any one of the preceding items wherein the gas stream comprising $CO_2$ is a flue gas comprising $CO_2$ conditioned with an aqueous solution in a scrubber.
Item 34. The method of any one of the preceding items wherein the membrane is shaped as a hollow fiber, and (a) the first surface of the membrane being the internal surface of the hollow fiber and the second surface being the external surface of the hollow fiber so that the gas stream being in contact with the internal surface and the aqueous solution being in contact with the external surface of the hollow fiber,
and wherein said method is used to decrease internal plugging of the hollow fiber, and/or when the gas stream flows in the lumen of the hollow fiber said method is used to decrease gas-stream pressure-drop evolution with time along the hollow fiber.
Item 35. The method of any one of the preceding items wherein when removing at least part of carbon dioxide ($CO_2$) from the gas stream by contacting said gas stream with the first surface of the membrane, a gas stream depleted in $CO_2$ and enriched in ammonia ($NH_3$) is obtained comprising steam ($H_2O$) and ammonia ($NH_3$), and wherein said steam ($H_2O$) is further at least partially condensed:

- either when contacted with the first surface of the membrane,
- or after being contacted with the first surface of the membrane,

so that to obtain an aqueous phase condensate comprising ammonia ($NH_3$) and to recover at least part of the ammonia present in the gas stream depleted in $CO_2$ and enriched in ammonia ($NH_3$).
Item 36. The method of preceding item wherein at least 30% of the ammonia present in the gas stream depleted in $CO_2$ and enriched in ammonia ($NH_3$) is condensed in the aqueous phase condensate.
Item 37. The method of preceding item wherein at least 40% of the ammonia present in the gas stream depleted in $CO_2$ and enriched in ammonia ($NH_3$) is condensed in the aqueous phase condensate.
Item 38. The method of preceding item wherein at least 50% of the ammonia present in the gas stream depleted in $CO_2$ and enriched in ammonia ($NH_3$) is condensed in the aqueous phase condensate.

Item 39. The method of preceding item wherein at least 60% of the ammonia present in the gas stream depleted in $CO_2$ and enriched in ammonia ($NH_3$) is condensed in the aqueous phase condensate.
Item 40. The method of preceding item wherein at least 80% of the ammonia present in the gas stream depleted in $CO_2$ and enriched in ammonia ($NH_3$) is condensed in the aqueous phase condensate.
Item 41. According to the invention the aqueous solution comprising ammonia ($NH_3$) comprises also dissolved $CO_2$ (generally as carbonates and/ or bicarbonates), and the molar fraction of $CO_2$ reported to total ammonia is at least 10%, preferably at least 20% mol $CO_2$/mol $NH_3$ in the aqueous solution.
Item 42. According to the invention the molar fraction of $CO_2$ reported to total ammonia is at most 70%, preferably at most 50% mol $CO_2$/mol $NH_3$ in the aqueous solution.
Item 43. The method of the preceding item wherein the molar fraction of $CO_2$ reported to total ammonia is at least 25% and at most 50%, preferably at least 30% and at most 40% mol $CO_2$/mol $NH_3$ in the aqueous solution.
Item 44. The method of any one of the preceding items wherein ammonia present:

- in the gas stream depleted in $CO_2$ and enriched in ammonia ($NH_3$) or,
- in the gas stream depleted in $CO_2$ and enriched in ammonia ($NH_3$) after steam ($H_2O$) has been partially condensed,

is less than 0.5, preferably less than 0.2 kg $NH_3$/ton of captured $CO_2$.
Item 45. According to the invention the pressure of gas stream being brought in contact with first surface of the membrane is at least 0.1 $10^5$ Pa, preferably at least 0.5 $10^5$ Pa.
Item 46. According to the invention the pressure of gas stream being brought in contact with first surface of the membrane is at most 20 $10^5$ Pa, preferably at most 10 $10^5$ Pa, more preferably at most 5 $10^5$ Pa, even more preferably at most 2 $10^5$ Pa.
Item 47. The method of any one of the preceding items wherein the pressure drop of the gas stream before being brought in contact with first surface of the membrane, and after being brought in contact with first surface of the membrane is at least 0.1 bar, preferably at least 0.2 bar.
Item 48. The method of any one of the preceding items wherein the pressure drop of the gas stream before being brought in contact with first surface of the membrane, and after being brought in contact with first surface of the membrane is at most 0.7 bar, preferably at most 0.5 bar.

**Detailed study and experiment**

**1. Chemistry of the $NH_3$-$CO_2$-$H_2O$ system**

1.1 Liquid phase

In aqueous solution, $NH_3$, $H_2O$ and $CO_2$ are dissociated as follows [19]:

$$2H_2O \overset{K_1}{\Leftrightarrow} H_3O^+ + OH^- \quad (1)$$

$$NH_3 + H_2O \overset{K_2}{\Leftrightarrow} NH_4^+ + OH^- \quad (2)$$

$$CO_2 + 2H_2O \overset{K_3}{\Leftrightarrow} HCO_3^- + H_3O^+ \quad (3)$$

$$HCO_3^- + H_2O \overset{K_4}{\Leftrightarrow} CO_3^{2-} + H_3O^+ \quad (4)$$

Ammonia and bicarbonate ions form carbamate ion:

$$NH_3 + HCO_3^- \overset{K_5}{\Leftrightarrow} NH_2COO^- + H_2O \quad (5)$$

Precipitates may be formed from these ionic species such as ammonium carbamate, ammonium bicarbonate, ammonium carbonate monohydrate or ammonium sesqui-carbonate:

$$NH_2COO^- + NH_4^+ \overset{K_6}{\Leftrightarrow} NH_2COONH_4(s) \quad (6)$$

$$NH_4^+ + HCO_3^- \overset{K_7}{\Leftrightarrow} NH_4HCO_3(s) \quad (7)$$

$$2NH_4^+ + CO_3^{2-} + H_2O \overset{K_8}{\Leftrightarrow} (NH_4)_2CO_3.H_2O\ (s) \quad (8)$$

$$4NH_4^+ + CO_3^{2-} + 2\,HCO_3^- \overset{K_9}{\Leftrightarrow} (NH_4)_2CO_3.2\,NH_4HCO_3 \quad (9)$$

1.2 Gas phase

In the gas phase, $CO_2$ and $NH_3$ can react to form carbamate which can then be hydrolyzed to form bicarbonate as described hereafter:

$$CO_{2\,(g)} + 2NH_{3\,(g)} \overset{K_{10}}{\Leftrightarrow} NH_2COONH_4(s) \quad (10)$$

$$NH_2COONH_{4(s)} + CO_{2\,(g)} + 2H_2O_{\left(\frac{g}{l}\right)} \overset{K_{11}}{\Leftrightarrow} 2NH_4HCO_3(s) \quad (11)$$

The formation of those ammonium salts in the gas phase was attested by some authors. Indeed, an investigation showed that the $CO_2$ from a synthetic flue gas (15/85 $CO_2/N_2$ mixture saturated with water vapor) can be removed via formation of solid $NH_4HCO_3$ through ammonia carbonation in the gas. The technology consisted in a semi-continuous-flow reactor where the flue gas was in contact with gaseous ammonia at room temperature and atmospheric pressure [20].

The dissociation of ammonium bicarbonate can be written as:

$$NH_{3\,(g)} + CO_{2\,(g)} + H_2O_{(g)} \overset{K_{12}}{\Leftrightarrow} NH_4HCO_3(s) \quad (12)$$

The dissociation constants of ammonium carbamate and ammonium bicarbonate are given by:

$$K_{10} = P_{CO_2}P_{NH_3}^2 \quad (13)$$

$$K_{12} = P_{CO_2}P_{NH_3}P_{H_2O} \quad (14)$$

Where $P_{CO_2}$, $P_{NH_2}$ and $P_{H_2O}$ represent partial pressures in bar of $NH_3$, $CO_2$ and $H_2O$ respectively.

Experiments have been made to measure the pressure of dissociation P with ammonium carbamate and bicarbonate as a function of the temperature and are reported in FIG. 2.

During those experiments, there wasn't any inert gas so the pressure measured corresponded to the sum of the partial pressures of ammonia, carbon dioxide and water only. Thus, the relationship between the dissociation constants and the pressure of equilibrium P measured can be obtained:

$$K_{10} = \frac{4}{27} P^3 \qquad (15)$$

$$K_{12} = \frac{1}{9} P^3 \qquad (16)$$

The dissociations constants are obtained from the dissociation pressure values and presented in Fig.3.

In the case of a gas mixture containing $CO_2$ and $NH_3$, solid ammonium carbamate salts appear when the product of the partial pressure of the two gases exceeds or equals the dissociation constant $K_{10}$ at the mixture temperature. If water is present, the ammonium carbamate can be hydrolyzed in ammonium bicarbonate according to Equation (11).

Ammonium carbamate or bicarbonate dissociates when the product of the partial pressures of $NH_3$, $CO_2$ and $H_2O$ is below their respective dissociation constant $K_{10}$ or $K_{12}$.

## 2. EXAMPLE 1 - Materials and methods

### 2.1 Membrane contactor

Commercial Oxyplus® membrane (from Membrana GmbH company, Germany) was used for the experimental study. It is made of a thin dense layer of poly(4-methyl-1-pentene) supported by a microporous support of polypropylene. Modules are made of PVC and are filled with fibers. The geometrical characteristics of the modules used here are given in Table 1.

TABLE 1

Table 1 : Membrane modules characteristics

| | Membrane contactor |
|---|---|
| Membrane material | Oxyplus® |
| Module internal diameter, cm | 1.3 |
| External fiber diameter, μm | 380 |
| Internal fiber diameter, μm | 200 |
| Active fiber length, cm | 25 |
| Total fiber length, cm | 27 |
| Number of fibers | 54 |
| Packing fraction, % | 4.6 |

### 2.2 Experimental setup

The experimental setup used is represented in Fig. 4.

Two Mass Flow Controllers (MFC, Bronkorst El-Flow Select) control the flow rate of nitrogen and carbon dioxide respectively in order to obtain a gas mixture with 15 % of $CO_2$ and to set the gas flow inside the lumen of the fibers. The molar fraction of $CO_2$ is verified before each experiment with an infrared analyzer MGA 3000 (Gruter and Marchand). The circulation of a fresh unloaded 5 wt% aqueous ammonia solution (prepared from a dilution of a 25 wt% ammonia solution from Sigma-Aldrich) is provided by a peristaltic pump (Watson and Marlow 314D). A thermostatic chamber fixes the temperature during the experiment. The temperature of the liquid is measured using thermocouples at the inlet and the outlet of the contactor. The variation of the gauge pressure at the gas inlet is measured with a manometer, while the gas outlet was at ambient pressure (atmospheric pressure).

The gas mixture can be humidified before entering the membrane contactor as shown in Fig. 4.

The gas mixture of $CO_2/N_2$ flows to the lumen fibers of a first membrane contactor with high gas residence time in order to insure the saturation. Hot water is circulated in the shell side with a membrane pump. The temperature

of the water is higher than the thermostatic chamber temperature to ensure the saturation of the gas before entering the absorption contactor. The excess of water vapor condenses in a condensation trap not represented in Fig. 4.

The relative humidity of the gas is verified before entering the absorption contactor with a thermo-hygrometer T3511P (Comet). A relative humidity between 98 and 100 % was measured.

2.3 Experimental conditions

The conditions tested are summarized in the Table 2.

TABLE 2

Table 2: Summary of the experimental conditions tested

| | Values |
|---|---|
| Temperature of the thermostated chamber | 10°, 21°, 40 °C |
| Inlet gas velocity | 1.3 - 1.6 - 2 m/s |
| Molar fraction of $CO_2$ at the gas inlet (dry basis) | 15 % |
| Mass fraction of ammonia in the solvent | 5 % (unloaded solution, i.e. 0 $molCO_2/molNH_3$) |
| Inlet gas relative humidity | 0 - 100 % |

A summary of the experiments performed including temperatures and flow rates is shown in Table 3.

The liquid flow rate was fixed in order to have mass flow rates liquid to gas ratio higher than 50. With such liquid excess, the composition of the liquid at the outlet is close to the one at the inlet. Thus, the liquid load ($molCO_2/molNH_3$) stay close to zero and the absorption experiments can be considered isothermal because the heat released by the absorption of $CO_2$ can be neglected. These conditions are not relevant of industrial conditions in which a high conversion of the liquid absorbent would be expected in order to reduce the energy demand of the regeneration step.

TABLE 3

Table 3 : Detailed conditions of the experiments presented in this paper

| Experiment label | $T_1$ | Inlet gas flow rate (Dry basis) | Inlet liquid flow rate | Humidity content of the gas inlet | $pH_2O$ partial pressure |
|---|---|---|---|---|---|
| - | °C | NmL/min | mL/min | Dry/ Humid | Pa |
| 1 | 10 | 200 | 12 | Humid | 1200 |
| 2 | 10 | 200 | | Dry | <120 |
| 3 | 21 | 200 | | Humid | 2460 |
| 4 | 21 | 200 | | Dry | <120 |
| 5 | 21 | 133 | | Dry | <120 |
| 6 | 21 | 133 | | Humid | 2460 |
| 7 | 40 | 133 | | Dry | <120 |

2.4. Analysis of the gas outlet composition

Molar fractions of $CO_2$ and $NH_3$ contained in the gas phase are measured with the infrared analyzer. The gas is then neutralized in sulfuric acid. The capture efficiency is calculated according to the formula below:

$$Carbon\ capture\ efficiency\ in\ \% = 100 * \frac{F_{CO2,g-in} - F_{CO2,g-outG}}{F_{CO2,in}} \quad (17)$$

Where $F_{CO2,in}$ is the molar flow rate of $CO_2$ entering the contactor and $F_{CO2,out}$ is the molar flow rate of $CO_2$ at the outlet calculated with the molar fractions $y_{CO2}$ and $Y_{NH3}$ measured by the infrared analyzer.

$$F_{CO2,g-outG} = F_{N2}\left(\frac{1}{1 - y_{CO2} - y_{NH3}} - 1\right) \quad (18)$$

In the gas phase, a solution, which can be saturated with ammonium salts, is formed. A glass trap is placed at the gas outlet to capture it. This solution contains ammonia and carbon dioxide under different forms (solids or in solution). To perform mass balance on these two species on the absorption process, the respective quantities of $CO_2$ and $NH_3$ have to be known. The solution is formed during the experiment which can last for 2 to 6.5 hours. The solution formed is weighed and stored at 4°C before analysis. If precipitates are visible inside the solution, the whole solution is diluted 10 times before starting the sample preparation for the analysis.

200 to 1000 $\mu$L of the solution is taken with a micropipette and added to a volumetric flask previously weighed and partially filled with milliQ-water to limit ammonia evaporation. The volumetric flask is totally filled. The solution prepared is then filtered with a 0.45 $\mu$m syringe filter (Acrodisc® 25 mm) before analysis with a TOC-TN Shimadzu analyzer. This device provides the carbon content and nitrogen content of the sample from which the $CO_2$ and $NH_3$ concentrations in the solution formed in the gas phase can be deducted.

## 3. EXAMPLE 1 - Results and discussion (Laboratory tests)

### 3.1 Dry inlet gas experiments

The hollow fiber module contactor was tested in different conditions summarized in Table 3. During experiments 2, 4 and 5, the $CO_2$ capture efficiency decreased during the first hours (see Fig. 5.a). In the meantime, the pressure in the gas line increased (See Fig. 5.b). The capture efficiency decreased from 70 to 20 % at 10°C (Exp. 2) and from 82 to 60 % at 21 °C (Exp. 5) meanwhile the pressure increased from 0.25 to 3 bars at 10°C and from 0.17 to 0.37 bars at 21°C. At 40°C, no capture efficiency drop is observed (average of 96.5%) whatever the gas is 'dry'(pH2O of < 120 Pa) or is humid ($pH_2O$ of 1200, 2650 Pa or higher) : the pressure in the gas line remains stable.

The pressure variation in the gas line corresponds to the variation of the pressure drop in the lumen side of the membrane contactor. The pressure drop in the lumen of the HFMC can be expressed according to the Hagen-Poiseuille equation :

$$\Delta P = \frac{32\mu vL}{d_{int}^2} \quad (19)$$

The increase of the pressure drop $\Delta P$ can only be explained by a decrease of the available gas section. As explained in Section 1.2, ammonia, carbon dioxide and water can react in the gas phase to form ammonium salts. It is then possible that the growth of the salts may promote the partial obstruction of the lumen of the fibers leading to the increase of the interstitial gas velocities v. If so, the contact time between the liquid and the gas decrease and the capture efficiency decreases as it appears when comparing the results of Exp.4 and Exp. 5. Both experiments are done in the same conditions except the gas flow rate. Capture efficiency is higher for the lower flow rate (Exp. 5) whereas the pressure drop is lower which is consistent because as the flow increases the contact time decreases and the interstitial velocity increases.

The temperature influences the stability upon time of the capture efficiency and the pressure drop. The higher the temperature the more stable they are. It is related to the dissociation constant $K_{10}$ of ammonium bicarbonate and $K_{12}$ of carbamate in the gas (Section 1.2) which greatly increases between 10 and 40 °C from $8.5*10^{-6}$ to $5.15*10^{-3}$ (see Fig. 3).

### 3.2 Reversibility of the fouling

The fouling leading to the decrease of the capture efficiency with time presented in the previous section is

reversible. Between each experiment, to unclog the fiber lumen, pure nitrogen flows in the lumen of the fibers and water at 30 °C in the shell side until the gas pressure returns to its initial value. This is illustrated in 6, the fouling from Exp. 2, during which the pressure increases to 3 bars in the gas line, is totally removed in less than one hour according to the pressure drop decrease from 3 to 0.15 bars.

Ammonium salts in contact with pure nitrogen decompose to maintain the gas-solid equilibrium described in Section1.2. The flow of nitrogen removes constantly the ammonia and carbon dioxide allowing the salts to decompose until total disappearance. With a temperature of 30 °C, the kinetic of decomposition is increased and the dissociation constant is higher increasing the unclogging kinetic (See Fig. 6).

3.3 Humid inlet gas experiments

In humid inlet gas conditions, the $CO_2$ capture efficiency remained stable for at least 5.5 hours for Experiments 3 (79 %) and 1 (67 %) and for 7 hours for Experiment 6 (83%) in the same conditions as Experiments 2, 4 and 5 (Fig. 7a). The inlet pressure remained stable at 0.18 barg for Experiment 6 during the 7 hours of experiments and slightly dropped for Experiments 1 and 3 for the two first hours and then remained stable at 0.25 barg (See Fig. 7b).

The initial capture efficiency for humid experiments is quite similar to the capture efficiency for dry experiments. The main observation is the stability of the results obtained with saturated inlet gas. It seems that the humidity content of the gas greatly affects the formation of ammonium salts during the experiments. The composition of the gas phase is very close to the one obtained for dry experiments such as the product of the partial pressure of the species should still be higher than the dissociation constant. Hence, from a thermodynamic point of view, the formation of salts seems to remain favorable. So the presence of water vapor in the inlet gas may participate in the decrease of the kinetics of formation of the ammonium salts or in the stability of the salts once formed preventing the formation of clogging solids in the lumen fibers. It is also possible that small amount of water condense and dissolve the salts freshly formed. However, so far, we didn't find any information in the literature to corroborate these assumptions.

So in industrial conditions, where the water content of the flue gas is close to the saturation, ammonium salts should not disturb the stability of the $CO_2$ capture efficiency in the membrane contactor.

See Fig. 7 a) and b)

3.4 Carbon and ammonia capture in the lumen phase: analysis

An aqueous solution containing ammonia and carbon dioxide which can contain precipitates of ammonia salts was trapped in the membrane contactor gas outlet. Concentration of 12.5 to 18.9 % of ammonia in weight and an average of 0.54 $molCO_2/molNH_3$ were found. These values were integrated in the mass balance as shown schematically in Fig. 8.

The total $CO_2$ capture efficiency is the result of two contributions. The first one is the absorption of $CO_2$ in the liquid absorbent flowing in the shell side of the membrane contactor which can be calculated as :

$$\eta_{liquid} = 100 * \frac{F_{CO2,g-in} - (F_{CO2,g-outG} + F_{CO2,g-outL})}{F_{CO2,g-in}} \qquad (20)$$

The second contribution to the $CO_2$ capture efficiency is the $CO_2$ capture in the gas phase within the solution obtained at the gas contactor outlet which can be obtained as :

$$\eta_{gas} = 100 * \frac{F_{CO2,g-outL}}{F_{CO2,g-in}} \qquad (21)$$

The ammonia slipping from the liquid absorbent related to the total $CO_2$ captured can be calculated according to the formula below :

$$Leak_{total} = \frac{17 * (F_{NH3,g-outL} + F_{NH3,g-outG})}{0.044 * (F_{CO2,g-in} - F_{CO2-outG})} \qquad (22)$$

The ammonia slipping from the liquid absorbent which remains in gas form can be calculated according to the formula below :

$$Leak_{gas} = \frac{17 * (F_{NH3,g-outG})}{0.044 * (F_{CO2,g-in} - F_{CO2-outG})} \quad (23)$$

The results of these calculations are presented in the Table 4.

When taking into account the amount of $CO_2$ trapped in a liquid in the lumen side of the contactor, it is found that an average of 11.8 % of the carbon dioxide was trapped in the gas phase.

The ammonia leaks measured according to the infrared analysis performed on the gas phase show an ammonia leak between 24 and 34 kg$NH_3$/ton $CO_2$ at 21°C, and 58 kg$NH_3$/ton $CO_2$ at 40°C. These values are close to the ones found in the literature within the same conditions and with the same membrane contactor (32 kg$NH_3$/ton $CO_2$ at 21°C and 52 kg$NH_3$/ton $CO_2$ at 45°C [14,15]). The ammonia leak calculated when taking into account the ammonia content inside the liquid formed in the gas phase is more than four times higher.

The ammonia leak within the same conditions for a packed column was estimated. The mass transfer of ammonia from the liquid to the gas in a packed column is fast leading to ammonia content in the gas phase in equilibrium with the ammonia concentration in the liquid [25]. Thus, the ammonia slip in a packed column was estimated considering gas-liquid equilibrium at the gas outlet. The pressure of equilibrium of ammonia was calculated using Henry's law and considering an unloaded 5 %wt ammonia solution. The Henry constant H (in atm) was calculated as follows [26] :

$$lnH = \frac{-4200}{T} + 3.133 \quad (24)$$

The ammonia leaks estimated in the packed column are in the same order of magnitude as the total ammonia leak in the membrane contactor. It seems that the membrane itself doesn't mitigate the ammonia leak as was assumed according to previous studies [13,14]. Nevertheless, on a process point of view, the ammonia leak which matters the most is the one which remains in the gas phase. This one is 3 to 5 times lower than the packed column leak due to the liquid formation in the gas phase which keeps a part of the ammonia. In the packed column, ammonium salts may also be formed in the gas phase but the liquid and gas phases are not separated leading to the dissolution of the solid salts. All the ammonia leaking from the gas should stay in the gas in the packed column.

**TABLE 4**

Table 4 : $CO_2$ capture efficiency and ammonia leak calculated according to the analysis performed in the gas phase

| Exp.* | $CO_2$ capture efficiency | | | $NH_3$ slip from the liquid solution | | |
|---|---|---|---|---|---|---|
| | Liquid phase | Gas phase | Total | Gas phase | Total | Estimation packed column |
| | $\eta_{liquid}$ | $\eta_{gas}$ | | $Leak_{gas}$ | $Leak_{total}$ | |
| | % | | | *kg$NH_3$/tons of $CO_2$(total)* | | |
| 1 | 57.9 | 9.3 | 67.2 | 24 | 122 | 88 |
| 2 | 48 | 6.6 | 54.6 | 53 | 160 | 198 |
| 3 | 67.1 | 12.7 | 79.8 | 24 | 143 | 123 |
| 5 | 67 | 16.8 | 83.8 | 34 | 182 | 115 |
| 6 | 75.4 | 13.6 | 89 | 34 | 149 | 110 |
| 7 | 84.7 | 11.8 | 96.5 | 58 | 162 | 240 |
| ** Exp. 4 not measured* | | | | | | |

The formation of this solution in the gas phase of the membrane contactor is not clear. We propose the following mechanism :

In the first part of the contactor, the product of activities of $NH_3$, $CO_2$ is higher than the dissociation constant leading to the formation of carbamate which is then hydrolyzed in bicarbonate with $H_2O$. Along the fiber, the carbon dioxide depletion participates in the decrease of the product of partial pressures of $NH_3$, $CO_2$ and $H_2O$ below the dissociation constant.

Therefore, ammonium salts sublime releasing $CO_2$, $NH_3$ and $H_2O$. By the end of the fiber, the water vapor content of the gas is already closed to saturation. The water coming from the sublimation of the salts condenses to form droplets which absorb ammonia and $CO_2$ and dissolve solid ammonium salts left leading to the solutions trapped by the end of the contactor.

**Conclusion example 1:**

This study has investigated the behavior of the aqueous ammonia based $CO_2$ capture process using membrane contactors. The formation of salts in the lumen of a membrane contactor used for $CO_2$ absorption in a chemical solvent is, to our knowledge, an exception attributed to aqueous ammonia.

According to experimental results performed at different temperatures, capture efficiency loss and pressure drop were found to be related. It seems that $CO_2$ and $NH_3$ react in the gas phase to form ammonium salts leading to obstructions in the lumen which promote the increase of the gas velocity and, thus, decrease the gas-liquid contact time. Therefore, the $CO_2$ capture efficiency decreases.

This precipitation leads also to the formation of a solution in the gas phase where a part of the carbon dioxide and an important amount of the ammonia slipped from the liquid side is captured. The analysis of this solution reveals that 75% of the ammonia leak is inside. The comparison between estimated ammonia leak from a packed column and from the membrane contactor showed that the membrane itself does not prevent the ammonia from leaving the absorbent solution. But, since a part of the ammonia is captured in an aqueous solution formed in the gas phase, it is possible to reduce the ammonia slip if this solution is reintegrated in the solvent loop.

Interestingly, when the gas is above 1200 Pa of water partial pressure, and more preferably when is saturated with water vapor, the $CO_2$ capture efficiency is constant over time on quite longer period, in particular when gas stream is at low temperature ($T_1$ less than 40°C or at most 35°C). Above 40°C, the sensitiveness on humidity of the gas stream is less sensitive to plugging. The inventors are of the opinion that this result may be related to the decrease of the salts precipitation kinetic or to micro-condensation and dissolution of the ammonium salts but without certainty. Nevertheless, this result allows to sensitively improve operating conditions of membrane contactors.

**4. EXAMPLE 2** - **Pilote Tests**

After first tests at lab scale (see EXAMPLE 1 above), wherein several lab-scale contactors made of Polypropylene hollow fiber (HF) coated with Teflon AF®, Polypropylene HF coated with Hyflon AD®, Polysulfone HF coated with Teflon AF®, Polysulfone coated with Hyflon AD® were tested giving stable CO2 capture efficiency on up to 6 hours period when gas stream has a steam ($H_2O$) partial-pressure of at least 1200 Pa, preferably at least 2460 Pa,
a membrane contactors similar to those of lab-scale tests but of larger surface:

- 6.3 $m^2$ (external surface of fibers) made of 6792 hollow fibers membrane of PP/PTFE (polypropylene with a dense skin of Teflon AF®), with 0.78 m useful fibers length, and max 2 kg CO2/h capacity, outside/ inside diameter of overall contactor pipe 5/3.5 cm), inside occupied volume by fibers bundle: 65%, was tested with dry gas or gas, comprising about 10% vol. of CO2 on dry gas basis, and having at least 1200 Pa of steam ($H_2O$) partial pressure, and were operated on continuous conditions (24h/24h) and on longer period (100 hours).

The tested conditions ranges of such tests were the following:

- Counter current gas-liquid circulation in the membrane contactors
- Gas circulation inside hollow fibers, liquid circulation outside hollow fibers)
- Delta pressure liquid over gas: about 20 mbar
- Pressure loss gas (gas inlet - gas outlet) : 50 to 300 mbar
- Contact time of gas stream in the membrane contactor : 0.2 to 0.5 seconds
- Gasses:
    - ◦ Flow rate 2-6 Nm3/h
    - ◦ Molar fraction of $CO_2$ tested: 9 to 15% vol.
    - ◦ Relative humidity of inlet gas before contactor : 0-100%
    - ◦ Inlet Temperature ($T_1$) : 10-50°C
    - ◦ Synthetic gasses ($CO_2$ and $N_2$) : 26 tests
    - ◦ Real fume gas from steam generator using coal as fossil-fuel: 2 tests (gas compositions CO2 9% vol., NO 100 ppm vol., SO2 20 ppm vol.).

- Liquid:

    - Flow rate 25 or 50 L/ h
    - Mass fraction of NH3 in water: 4.5 to 5.5 of inlet aqueous solution
    - Load fraction of $CO_2$ reported to total ammonia (as $NH4^+$ions): 0-53% mol CO2/mol $NH_3$
    - Temperature of aqueous ammonia solution ($T_2$): 10 - 35°C.

Stable conditions were observed when steam ($H_2O$) partial pressure of at least 1200 Pa was present in entering gasses, and preferably when inlet gasses had a relative humidity of above 90% compared to their inlet temperature in the 10 to 35°C range, enabling constant $CO_2$ capture on long period of times, with an overall gas pressure (inlet pressure of gas stream at 0.30-0.45 bar gauge relative to ambient pressure; while the outlet pressure of gas stream depleted in $CO_2$ at was ambient pressure) relatively constant with time on periods over 8 hours.

Comparatively the use of dry gasses at $P_{H2O}$ < 120 Pa lead to rapid $CO_2$ capture drop and drop in gas-flow in 1 to 2 hours, at a given over-pressure of the gas inlet, demonstrating clogging of the membrane contactor and fibers lumen.

According to the gas stream flow and loading charge of the membrane contactor, the $CO_2$ capture efficiency in the aqueous phase was in the range of 30 to 90%, most of the trials showing $CO_2$ capture efficiency between 70 to 90%. The loss of ammonia from the aqueous solution to the gas stream depleted in $CO_2$ after contact with the membrane contactor was less than 0.4 kg $NH_3$ per ton of captured $CO_2$. Moreover when collecting the condensates exiting the membrane contactor, about 0.2 kg $NH_3$/ ton of captured $CO_2$ were present in condensate, and could therefore being recycled for further $CO_2$ capture.

Moreover it was observed that regarding the aqueous solution comprising ammonia used as captured solution, a load fraction of $CO_2$ reported to total ammonia in the solution of less 0 to 5% mol $CO_2$/mol $NH_3$ in the aquous soltion generated an important transfer of free ammonia from the aqueous solution into the gas stream (more than 2 kg $NH_3$ per ton of captured $CO_2$).

As, when the aqueous solution comprising ammonia used to capture $CO_2$, had a load fraction of $CO_2$ reported to total ammonia in the solution of more than 10%, preferably more than 20%, or even more preferably more than 30% mol $CO_2$/mol $NH_3$, lead to an ammonia transfer in the gas stream of at most 0.4 kg $NH_3$/ t captured $CO_2$, and more than half of the ammonia transferred to the gas stream and exiting the membrane contactor could be collected within the condensates exiting the membrane contactor, and be recycled back to $CO_2$ capture. Though, upper load fraction of $CO_2$ of the aqueous solution reported to total ammonia of more than 70% is detrimental to $CO_2$ capture efficacy: therefore preferred load fraction of $CO_2$ reported to total ammonia in the aqueous solution should be more than 30% and less than 70% mol $CO_2$/mol $NH_3$ as a good compromise between high $CO_2$ capture and limited ammonia loss in gas stream.

Should the disclosure of any patents, patent applications, and publications cited herein conflict with the description of the present application to the extent that it may render a term unclear, the present description shall take precedence.

References

[1] World Meteorological Organization, The state of greenhouse gases in the atomosphere based on global observations, Greenh. Gas Bull. (2014) 1-17. doi:ISSN 2078-0796.

[2] International Energy Agency, Technology Roadmap, SpringerReference. (2013) 59. doi:10.1007/SpringerReference_7300.

[3] A.S. Bhown, B.C. Freeman, Analysis and status of post-combustion carbon dioxide capture technologies, Environ. Sci. Technol. 45 (2011) 8624-8632. doi:10.1021/es104291d.

[4] P. Corp, P. Corp, I. Drive, Testing of Ammonia Based CO 2 Capture with Multi-Pollutant Control Technology, (2008).

[5] G. Lombardo, R. Agarwal, J. Askander, Chilled Ammonia Process at Technology Center Mongstad - First Results, Energy Procedia. 51 (2014) 31-39. doi:10.1016/j.egypro.2014.07.004.

[6] K. Han, C.K. Ahn, M.S. Lee, C.H. Rhee, J.Y. Kim, H.D. Chun, Current status and challenges of the ammonia-based CO2 capture technologies toward commercialization, Int. J. Greenh. Gas Control. 14 (2013) 270-281. doi:10.1016/j.ijggc.2013.01.007.

[7] General Elecric, Improvement of GE Power' s Chilled Ammonia Process using Membrane Technology, (2016).

[8] E. Favre, H.F. Svendsen, Membrane contactors for intensified post-combustion carbon dioxide capture by gas-liquid absorption processes, J. Memb. Sci. 407-408 (2012) 1-7. doi:10.1016/j.memsci.2012.03.019.

[9] A. Gabelman, S.-T. Hwang, Hollow fiber membrane contactors, J. Memb. Sci. 159 (1999) 61-106. doi:10.1016/S0376-7388(99)00040-X.

[10] R. Wang, H.Y. Zhang, P.H.M. Feron, D.T. Liang, Influence of membrane wetting on CO2 capture in microporous hollow fiber membrane contactors, Sep. Purif. Technol. 46 (2005) 33-40. doi:10.1016/j.seppur.2005.04.007.

[11] E. Chabanon, D. Roizard, E. Favre, Membrane contactors for postcombustion carbon dioxide capture: A comparative study of wetting resistance on long time scales, Ind. Eng. Chem. Res. 50 (2011) 8237-8244. doi:10.1021/ie200704h.

[12] A. McLeod, P. Buzatu, O. Autin, B. Jefferson, E. McAdam, Controlling shell-side crystal nucleation in a gas-liquid membrane contactor for simultaneous ammonium bicarbonate recovery and biogas upgrading, J. Memb. Sci. 473 (2015) 146-156. doi:10.1016/j.memsci.2014.07.063.

[13] A. McLeod, B. Jefferson, E.J. McAdam, Biogas upgrading by chemical absorption using ammonia rich absorbents derived from wastewater, Water Res. 67 (2014) 175-186. doi:10.1016/j.watres.2014.09.010.

[14] C. Makhloufi, E. Lasseuguette, J.C. Remigy, B. Belaissaoui, D. Roizard, E. Favre, Ammonia based CO2 capture process using hollow fiber membrane contactors, J. Memb. Sci. 455 (2014) 236-246. doi:10.1016/j.memsci.2013.12.063.

[15] C. Makhloufi, Etude expérimentale et modelisation d'un procédé de captage du CO2 en postcombustion par l'ammoniaque a l'aide de contacteurs membranaires: du matériau a l'évaluation de l'intensification de l'absorption., 2013.

[16] M. Mehdipour, P. Keshavarz, A. Seraji, S. Masoumi, Performance analysis of ammonia solution for CO2 capture using microporous membrane contactors, Int. J. Greenh. Gas Control. 31 (2014) 16-24. doi:10.1016/j.ijggc.2014.09.017.

[17] H. Yu, S. Morgan, A. Allport, A. Cottrell, T. Do, J. McGregor, L. Wardhaugh, P. Feron, Results from trialling aqueous NH3 based post-combustion capture in a pilot plant at Munmorah power station: Absorption, Chem. Eng. Res. Des. 89 (2011) 1204-1215. doi:10.1016/j.cherd.2011.02.036.

[18] C. Makhloufi, D. Roizard, E. Favre, Reverse selective NH3/CO2 permeation in fluorinated polymers using membrane gas separation, J. Memb. Sci. 441 (2013) 63-72. doi:10.1016/j.memsci.2013.03.048.

[19] V. Darde, K. Thomsen, W.J.M. van Well, E.H. Stenby, Chilled ammonia process for CO2 capture, Int. J. Greenh. Gas Control. 4 (2010) 131-136. doi:10.1016/j.ijggc.2009.10.005.

[20] X. Li, E. Hagaman, C. Tsouris, J.W. Lee, Removal of carbon dioxide from flue gas by ammonia carbonation in the gas phase, Energy and Fuels. 17 (2003) 69-74. doi:10.1021/ef020120n.

[21] Kirk Othmer, Kirk _Othmer encyclopedia of chemical Engineering - Fourth edition, 1992.

[22] Ullmann, Ullman's encyclopedia of industrial chemistry, 1985.

[23] E.P. Egan, J.E. Potts, G.D. Potts, Dissociation Pressure of Ammonium Carbamate, Ind. Eng. Chem. 38 (1946) 454-456. doi:10.1021/ie50436a027.

[24] M.J. Joncich, B.H. Solka, J.E. Bower, Thermodynamic Properties of Ammonium Carbamate, J. Chem. Ed. 44 (1967) 598.

[25] G. Qi, S. Wang, H. Yu, L. Wardhaugh, P. Feron, C. Chen, Development of a rate-based model for CO2 absorption

using aqueous NH3 in a packed column, Int. J. Greenh. Gas Control. 17 (2013) 450-461. doi:10.1016/j.ijggc.2013.05.027.

[26] A. Hasanoĝlu, J. Romero, B. Perez, A. Plaza, Ammonia removal from wastewater streams through membrane contactors: Experimental and theoretical analysis of operation parameters and configuration, Chem. Eng. J. 160 (2010) 530-537. doi:10.1016/j.cej.2010.03.064.

Table 5 : Review of ammonia based CO2 capture studies using membrane contactor

| **Membrane *Furnisher*** | **Gas Mixture** | **Ammonia concentration - Initial loading - flow configuration** | **G/L** | **Salts precipitation *Liquid /gas side*** | **Main remarks** | **Year** | **Ref.** |
|---|---|---|---|---|---|---|---|
| PP (3 M *Membrana GmbH),* PP+PMP (3M *Membrana GmbH),* PP+Teflon AF 2400 *(In house)* | 15 % of $CO_2$ in $N_2$ | 1-3-5 wt% $NH_3$solution-unloaded - counter-current | 50-140 | *Gas side* Lumen side precipitation of ammonium salts | Stable performance (during about one hour) is obtained with composite HFMC but not with microporous HFMC. High intensification potential and $NH_3$ slip mitigation is observed for HFMC compared to packed column. | 2014 | [14,15] |
| PP *3M MembranaGmbH* | 40 % of $CO_2$ in $CH_4$ | 0.1 à 5 wt% $NH_3$solution - unloaded - cocurrent | 200 - 1100 | *Liquid side* A mmonium bicarbonate crystallization mostly on the membrane surface | The authors report a volume reduction of 3.5 compared to packed column. The ammonia slip measured is two orders of magnitude below than the one in packed column. | 2014 | [13] |
| PP | 20% of $CO_2$ in $N_2$ | 3 à 8 wt% $NH_3$ solution-unloaded-counter-current | 110-500 | Not applicable | *Simulation study only* 2D isothermal modeling Model validated with DEA experiments. Comparison of the two solvents $NH_3$ and DEA. | 2014 | [16] |
| PTFE (*Market*), PDMS | 50 % of $CO_2$ in $CH_4$ | 3 à 12 % $NH_3$solution-unloaded-counter-current | 10-500 | *Liquid side* Ammonium bicarbonate crystallization *Gas side* Lumen side precipitation of ammonium salts until lumen blockage (room temperature) | Lumen side crystallization leads to the blockage of the lumen after less than one minute for 8.5 and 5 %wt $NH_3$ solutions and the $CO_2$ flux is divided by 2 for 3%wt $NH_3$ solution.. Lumen side crystallization is also observed with non-porous PDMS HFMC ($CO_2$ flux reduced after 800 seconds). | 2015 | [12] |

## Claims

1. A method for removing at least part of carbon dioxide ($CO_2$) from a gas stream,
using a membrane that is permeable to $CO_2$, having a first surface and a second opposing surface, wherein the membrane comprises, or is made of, a polymer selected from polyene, polyalkene, polysulfone (PSU), polyethersulfone (PES), perfluoropolymers,
said method comprising bringing the gas stream in contact with the first surface of the membrane, and bringing the second surface of the membrane with an aqueous solution comprising ammonia ($NH_3$) at a temperature $T_2$, said temperature $T_2$ being the temperature of the aqueous solution when starting to be brought in contact with the second surface of the membrane so that at least part of the $CO_2$ of the gas stream is removed from the gas stream and transferred through the membrane to the aqueous solution,
said method being **characterized in that**:

   - the pressure of the gas stream being brought in contact with the first surface of the membrane is at least 0.1 $10^5$ Pa and at most at most 20 $10^5$ Pa;
   - the gas stream has a steam ($H_2O$) partial-pressure of at least 1200 Pa, wherein the steam ($H_2O$) partial-pressure is steam ($H_2O$) partial-pressure when starting bringing the gas stream in contact with the first surface of the membrane;
   - the temperature $T_2$ of the aqueous solution is at least 1°C and at most 50°C;
   - the aqueous solution comprises at least 0.02 mol and at most 6 mol of total ammonia expressed as ammonium ion ($NH_4^+$) per liter of aqueous solution;
   - and said aqueous solution comprises also dissolved $CO_2$ wherein the molar fraction of dissolved $CO_2$ reported to total ammonia is at least 10% and at most 70% mol $CO_2$/mol $NH_3$ in the aqueous solution.

2. The method of claim 1 wherein the gas stream is at a temperature $T_1$, and the gas stream has a steam partial-pressure of at least 15 %, advantageously at least 50 %, more advantageously at least 70 %, even more advantageously at least 80%, even more advantageously at least 90 %, even more advantageously at least 95 %, even more advantageously at least 98 % of the saturated pressure of water at temperature $T_1$.

3. The method of claims 1 or 2 wherein the membrane is shaped as an hollow fiber,

   (a) the first surface of the membrane being the internal surface of the hollow fiber and the second surface being the external surface of the hollow fiber,
   or
   (b) the first surface of the membrane being the external surface of the hollow fiber and the second surface being the internal surface of the hollow fiber.

4. The method of claim 3 wherein the membrane is shaped as a plurality of hollow fibers, said plurality of hollow fibers being preferably packaged in a tube-and-shell arrangement.

5. The method of claim 1 wherein the membrane is shaped as a spiral membrane contactor or as a parallel-plates membrane contactor.

6. The method of any of the preceding claims wherein the polymer is selected from polyethylene (PE), polypropylene (PP), polymethylpentene (PMP) polytetrafluoroethylene (PTFE), polyacrylonitrile (PAN).

7. The method of any one of the preceding claims wherein the membrane is a composite membrane made of micro-porous layer, defined as a material in which the transport of gases relies mainly or only on diffusion giving rise to Knudsen selectivity for gas mixtures, and a dense layer, defined as a material in which the transport relies on both sorption and diffusion in the polymer phase able to give rise to higher selectivity than Knudsen selectivity.

8. The method of any one of claims 3 to 4 or 6 to 7 Z 8 , wherein the membrane is shaped as a hollow fiber, and said hollow fiber has an external diameter of at least 100 and/or at most 1000 μm, preferably of at least 150 and/or at most 500 μm.

9. The method of any one of claims 3 to 4 or 6 to 8 , wherein the membrane is shaped as an hollow fiber, and said hollow fiber has an internal diameter (or lumen diameter) of at least 50 and/or at most 800 μm, preferably of at least 100 and/or at most 300 μm.

10. The method of any one of the preceding claims wherein the membrane has an overall mass transfer coefficient of $CO_2$ at 20 °C of at least $10^{-6}$ m/s and/or at most $10^{-1}$ m/s, preferably of at least $10^{-5}$ m/s and/or at most $10^{-2}$m/s.

11. The method of any one of the preceding claims wherein the dense layer has a thickness of at least 0.05 μm and/or at most 20 μm, preferably of at least 0.1 μm and/or at most 5 μm.

12. The method of any one of the preceding claims wherein the membrane has a plurality of micro-pores, and said micro-pores have mean diameters of at least 0.05 μm and/or at most 5 μm, preferably of at least 0.1 μm. and/or at most 0.5 μm.

13. The method of any one of the preceding claims wherein the temperature $T_2$ of the inlet aqueous solution comprising ammonia ($NH_3$) is at least 5°C and at most 50°C and advantageously the temperature $T_2$ is equal or lower than the temperature $T_1$ of the inlet gas stream.

14. The method of any one of the preceding claims wherein when removing at least part of carbon dioxide ($CO_2$) from the gas stream by contacting said gas stream with the first surface of the membrane, a gas stream depleted in $CO_2$ and enriched in ammonia ($NH_3$) is obtained comprising steam ($H_2O$) and ammonia ($NH_3$), and wherein said steam ($H_2O$) is further at least partially condensed:

- either when contacted with the first surface of the membrane,
- or after being contacted with the first surface of the membrane,

so that to obtain an aqueous phase condensate comprising ammonia ($NH_3$) and to recover at least part of the ammonia present in the gas stream depleted in $CO_2$ and enriched in ammonia ($NH_3$).

**Patentansprüche**

1. Verfahren zur Entfernung von zumindest einem Teil des Kohlendioxids ($CO_2$) aus einem Gasstrom unter Verwendung einer für $CO_2$ durchlässigen Membran mit einer ersten Oberfläche und einer zweiten gegenüberliegenden Oberfläche, wobei die Membran ein aus Polyen, Polyalken, Polysulfon (PSU), Polyethersulfon (PES), Perfluorpolymeren ausgewähltes Polymer umfasst oder daraus hergestellt ist,
wobei man bei dem Verfahren den Gasstrom mit der ersten Oberfläche der Membran in Kontakt bringt und die zweite Oberfläche der Membran bei einer Temperatur $T_2$ mit einer Ammoniak ($NH_3$) umfassenden wässrigen Lösung in Kontakt bringt, wobei die Temperatur $T_2$ die Temperatur der wässrigen Lösung zu Beginn ihres Inkontaktbringens mit der zweiten Oberfläche der Membran ist, sodass zumindest ein Teil des $CO_2$ in dem Gasstrom aus dem Gasstrom entfernt und über die Membran der wässrigen Lösung zugeführt wird,
wobei das Verfahren **dadurch gekennzeichnet ist, dass**:

- der Druck von dem Gasstrom, den man mit der ersten Oberfläche der Membran in Kontakt bringt, mindestens 0,1 $10^5$ Pa und höchstens 20 $10^5$ Pa beträgt;
- der Gasstrom einen Wasserdampf ($H_2O$)-Partialdruck von mindestens 1200 Pa aufweist, wobei der Wasserdampf ($H_2O$)-Partialdruck der Wasserdampf($H_2O$)-Partialdruck zu Beginn des Inkontaktbringens des Gasstroms mit der ersten Oberfläche der Membran ist;
- die Temperatur $T_2$ der wässrigen Lösung mindestens 1 °C und höchstens 50 °C beträgt;
- die wässrige Lösung einen Gesamtammoniakgehalt von mindestens 0,02 mol und höchstens 6 mol, ausgedrückt als Ammoniumion ($NH_4^+$) pro Liter wässriger Lösung, aufweist;
- und die wässrige Lösung auch gelöstes $CO_2$ umfasst, wobei in der wässrigen Lösung der angegebene Stoffmengenanteil an gelöstem $CO_2$, bezogen auf den Gesamtammoniakgehalt, mindestens 10 % und höchstens 70 % mol CO2/mol $NH_3$ beträgt.

2. Verfahren nach Anspruch 1, wobei der Gasstrom eine Temperatur $T_1$ aufweist und der Gasstrom einen Wasserdampfpartialdruck von mindestens 15 %, vorteilhaft mindestens 50 %, vorteilhafter mindestens 70 %, noch vorteilhafter mindestens 80 %, noch vorteilhafter mindestens 90 %, noch vorteilhafter mindestens 95 %, noch vorteilhafter mindestens 98 % des Sättigungsdrucks von Wasser bei Temperatur $T_1$ aufweist.

3. Verfahren nach Anspruch 1 oder 2, wobei die Membran wie eine Hohlfaser geformt ist, wobei

(a) die erste Oberfläche der Membran die innere Oberfläche der Hohlfaser darstellt und die zweite Oberfläche die äußere Oberfläche der Hohlfaser darstellt
oder
(b) die erste Oberfläche der Membran die äußere Oberfläche der Hohlfaser darstellt und die zweite Oberfläche die innere Oberfläche der Hohlfaser darstellt.

**4.** Verfahren nach Anspruch 3, wobei die Membran in Form von mehreren Hohlfasern vorliegt, wobei die mehreren Hohlfasern vorzugsweise in einer Rohrbündelanordnung angeordnet sind.

**5.** Verfahren nach Anspruch 1, wobei die Membran als Spiralwickelmembrankontaktor oder als Parallelplattenmembrankontaktor geformt ist.

**6.** Verfahren nach einem der vorhergehenden Ansprüche, wobei das Polymer aus Polyethylen (PE), Polypropylen (PP), Polymethylpenten (PMP) Polytetrafluorethylen (PTFE), Polyacrylonitril (PAN) ausgewählt ist.

**7.** Verfahren nach einem der vorhergehenden Ansprüche, wobei es sich bei der Membran um eine Verbundmembran aus einer mikroporösen Schicht, definiert als ein Material, bei dem der Gastransport hauptsächlich oder ausschließlich auf Diffusion beruht und somit für Gasgemische die Gasselektivität nach Knudsen ermöglicht, und einer dichten Schicht, definiert als ein Material, bei dem der Transport sowohl auf Sorption als auch auf Diffusion in die Polymerphase beruht und das somit eine höhere Selektivität als die Knudsen-Selektivität ermöglicht, handelt.

**8.** Verfahren nach einem der Ansprüche 3 bis 4 oder 6 bis 7, wobei die Membran als Hohlfaser geformt ist und die Hohlfaser einen äußeren Durchmesser von mindestens 100 und/oder höchstens 1000 μm, vorzugsweise von mindestens 150 und/oder höchstens 500 μm, aufweist.

**9.** Verfahren nach einem der Ansprüche 3 bis 4 oder 6 bis 8, wobei die Membran als Hohlfaser geformt ist und die Hohlfaser einen inneren Durchmesser (oder Lumendurchmesser) von mindestens 50 und/oder höchstens 800 μm, vorzugsweise von mindestens 100 und/oder höchstens 300 μm, aufweist.

**10.** Verfahren nach einem der vorhergehenden Ansprüche, wobei die Membran bei 20 °C einen Gesamt-Stoffübergangskoeffizienten für $CO_2$ von mindestens $10^{-6}$ m/s und/oder höchstens $10^{-1}$ m/s, vorzugsweise von mindestens $10^{-5}$ m/s und höchstens $10^{-2}$ m/s aufweist.

**11.** Verfahren nach einem der vorhergehenden Ansprüche, wobei die dichte Schicht eine Dicke von mindestens 0,05 μm und/oder höchstens 20 μm, vorzugsweise von mindestens 0,1 μm und/oder höchstens 5 μm, aufweist.

**12.** Verfahren nach einem der vorhergehenden Ansprüche, wobei die Membran mehrere Mikroporen aufweist und die Mikroporen mittlere Durchmesser von mindestens 0,05 μm und/oder höchstens 5 μm, vorzugsweise von mindestens 0,1 μm und/oder höchstens 0,5 μm, aufweisen.

**13.** Verfahren nach einem der vorhergehenden Ansprüche, wobei die Temperatur $T_2$ der einströmenden Ammoniak ($NH_3$) umfassenden wässrigen Lösung mindestens 5 °C und höchstens 50 °C beträgt und die Temperatur $T_2$ vorteilhafterweise gleich der oder niedriger als die Temperatur $T_1$ des einströmenden Gasstroms ist.

**14.** Verfahren nach einem der vorhergehenden Ansprüche, wobei man bei der Entfernung von zumindest einem Teil des Kohlendioxids ($CO_2$) aus dem Gasstrom durch das Inkontaktbringen des Gasstroms mit der ersten Oberfläche der Membran einen an $CO_2$ verarmten und mit Ammoniak ($NH_3$) angereicherten Gasstrom, der Wasserdampf ($H_2O$)und Ammoniak ($NH_3$) umfasst, erhält und wobei der Wasserdampf ($H_2O$)ferner zumindest teilweise kondensiert wird, und zwar:

- entweder, wenn man ihn mit der ersten Oberfläche der Membran in Kontakt bringt
- oder nachdem man ihn mit der ersten Oberfläche der Membran in Kontakt gebracht hat,

sodass man ein Ammoniak ($NH_3$) umfassendes Kondensat einer wässrigen Phase erhält und zumindest einen Teil des in dem an $CO_2$ verarmten und mit Ammoniak ($NH_3$) angereicherten Gasstrom vorhandenen Ammoniaks zurückgewinnt.

**Revendications**

1. Procédé pour l'élimination d'au moins une partie du dioxyde de carbone ($CO_2$) d'un flux gazeux, à l'aide d'une membrane qui est perméable au $CO_2$, possédant une première surface et une deuxième surface opposée, la membrane comprenant un, ou étant composée d'un, polymère choisi parmi un polyène, un polyalcène, une polysulfone (PSU), une polyéthersulfone (PES), des perfluoropolymères, ledit procédé comprenant la mise en contact du flux gazeux avec la première surface de la membrane, et la mise en contact de la deuxième surface de la membrane avec une solution aqueuse comprenant de l'ammoniac ($NH_3$) à une température $T_2$, ladite température $T_2$ étant la température de la solution aqueuse au début de la mise en contact avec la deuxième surface de la membrane de sorte qu'au moins une partie du $CO_2$ du flux gazeux est éliminée du flux gazeux et transférée à travers la membrane à la solution aqueuse,
ledit procédé étant **caractérisé en ce que** :

   - la pression du flux gazeux mis en contact avec la première surface de la membrane est d'au moins 0,1 $10^5$ Pa et d'au plus 20 $10^5$ Pa ;
   - le flux gazeux possède une pression partielle de vapeur ($H_2O$) d'au moins 1 200 Pa, la pression partielle de vapeur ($H_2O$) étant la pression partielle de vapeur ($H_2O$) au début de la mise en contact du flux gazeux avec la première surface de la membrane ;
   - la température $T_2$ de la solution aqueuse est d'au moins 1 °C et d'au plus 50 °C ;
   - la solution aqueuse comprend au moins 0,02 mole et au plus 6 moles d'ammoniac total exprimé en en ions ammonium ($NH_4^+$) par litre de solution aqueuse ;
   - et ladite solution aqueuse comprend également du $CO_2$ dissous, la fraction molaire de $CO_2$ dissous par rapport à l'ammoniac total étant d'au moins 10 % et d'au plus 70 % en moles de $CO_2$/mole de $NH_3$ dans la solution aqueuse.

2. Procédé selon la revendication 1, le flux gazeux étant à une température $T_1$, et le flux gazeux possédant une pression partielle de vapeur d'au moins 15 %, avantageusement d'au moins 50 %, plus avantageusement d'au moins 70 %, encore plus avantageusement d'au moins 80 %, encore plus avantageusement d'au moins 90 %, encore plus avantageusement d'au moins 95 %, encore plus avantageusement d'au moins 98 % de la pression saturée d'eau à la température $T_1$.

3. Procédé selon la revendication 1 ou 2, la membrane étant façonnée en une fibre creuse,

   (a) la première surface de la membrane étant la surface interne de la fibre creuse et la deuxième surface étant la surface externe de la fibre creuse,
   ou
   (b) la première surface de la membrane étant la surface externe de la fibre creuse et la deuxième surface étant la surface interne de la fibre creuse.

4. Procédé selon la revendication 3, la membrane étant façonnée en une pluralité de fibres creuses, ladite pluralité de fibres creuses étant préférablement assemblée dans un agencement de type tube-et-enveloppe.

5. Procédé selon la revendication 1, la membrane étant façonnée en un contacteur à membrane en spirale ou en un contacteur à membrane à plaques parallèles.

6. Procédé selon l'une quelconque des revendications précédentes, le polymère étant choisi parmi le polyéthylène (PE), le polypropylène (PP), le polyméthylpentène (PMP), le polytétrafluoroéthylène (PTFE), le polyacrylonitrile (PAN).

7. Procédé selon l'une quelconque des revendications précédentes, la membrane étant une membrane composite composée d'une couche microporeuse, définie comme un matériau dans lequel le transport des gaz repose principalement ou seulement sur la diffusion donnant lieu à une sélectivité de Knudsen pour des mélanges de gaz, et d'une couche dense, définie comme un matériau dans lequel le transport repose à la fois sur la sorption et la diffusion dans la phase polymère capable de donner lieu à une sélectivité plus élevée que la sélectivité de Knudsen.

8. Procédé selon l'une quelconque des revendications 3 et 4 ou 6 et 7, la membrane étant façonnée en une fibre creuse, et ladite fibre creuse possédant un diamètre externe d'au moins 100 et/ou d'au plus 1 000 μm, préférablement d'au moins 150 et/ou d'au plus 500 μm.

**9.** Procédé selon l'une quelconque des revendications 3 et 4 ou 6 à 8, la membrane étant façonnée en une fibre creuse, et ladite fibre creuse possédant un diamètre interne (ou diamètre du lumen) d'au moins 50 et/ou d'au plus 800 µm, préférablement d'au moins 100 et/ou d'au plus 300 µm.

**10.** Procédé selon l'une quelconque des revendications précédentes, la membrane possédant un coefficient de transfert de masse globale de $CO_2$ à 20 °C d'au moins $10^{-6}$ m/s et/ou d'au plus $10^{-1}$ m/s, préférablement d'au moins $10^{-5}$ m/s et/ou d'au plus $10^{-2}$ m/s .

**11.** Procédé selon l'une quelconque des revendications précédentes, la couche dense possédant une épaisseur d'au moins 0,05 µm et/ou d'au plus 20 µm, préférablement d'au moins 0,1 µm et/ou d'au plus 5 µm.

**12.** Procédé selon l'une quelconque des revendications précédentes, la membrane possédant une pluralité de micropores, et lesdits micropores possédant des diamètres moyens d'au moins 0,05 µm et/ou d'au plus 5 µm, préférablement d'au moins 0,1 µm et/ou d'au plus 0,5 µm.

**13.** Procédé selon l'une quelconque des revendications précédentes, la température $T_2$ de la solution aqueuse d'entrée comprenant de l'ammoniac ($NH_3$) étant d'au moins 5 °C et d'au plus 50 °C et avantageusement la température $T_2$ étant égale ou inférieure à la température $T_1$ du flux gazeux d'entrée.

**14.** Procédé selon l'une quelconque des revendications précédentes, où lors de l'élimination d'au moins une partie du dioxyde de carbone ($CO_2$) du flux gazeux par la mise en contact dudit flux gazeux avec la première surface de la membrane, un flux gazeux appauvri en $CO_2$ et enrichi en ammoniac ($NH_3$) est obtenu comprenant de la vapeur ($H_2O$) et de l'ammoniac ($NH_3$) , et ladite vapeur ($H_2O$) étant en outre au moins partiellement condensée :

- soit lorsqu'elle est mise en contact avec la première surface de la membrane,
- soit après avoir été mise en contact avec la première surface de la membrane,

afin d'obtenir un condensat de phase aqueuse comprenant de l'ammoniac ($NH_3$) et de récupérer au moins une partie de l'ammoniac présent dans le flux gazeux appauvri en $CO_2$ et enrichi en ammoniac ($NH_3$) .

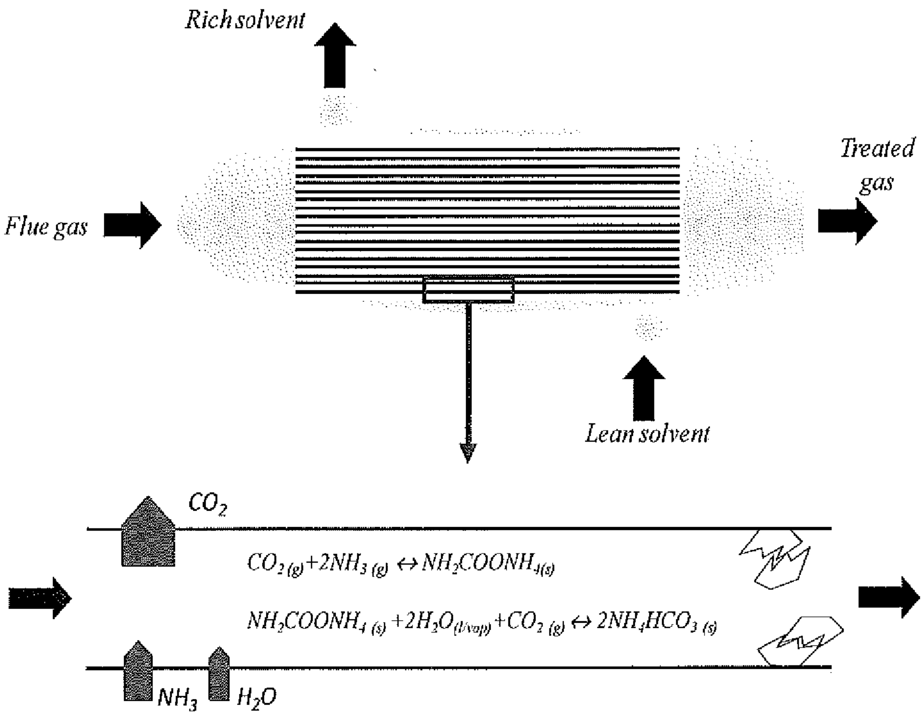
Rich solvent
Treated gas
Flue gas
Lean solvent
$CO_2$
$CO_{2\,(g)} + 2NH_{3\,(g)} \leftrightarrow NH_2COONH_{4(s)}$
$NH_2COONH_{4\,(s)} + 2H_2O_{(l/vap)} + CO_{2\,(g)} \leftrightarrow 2NH_4HCO_{3\,(s)}$
$NH_3$
$H_2O$

FIG. 1

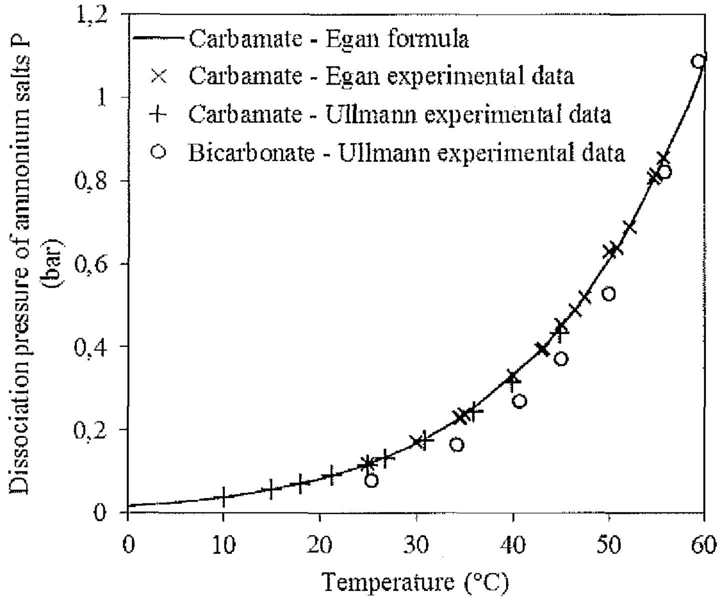
1,2
1
0,8
0,6
0,4
0,2
0
0
10
20
30
40
50
60
Dissociation pressure of ammonium salts P (bar)
Temperature (°C)
Carbamate - Egan formula
Carbamate - Egan experimental data
Carbamate - Ullmann experimental data
Bicarbonate - Ullmann experimental data

FIG. 2

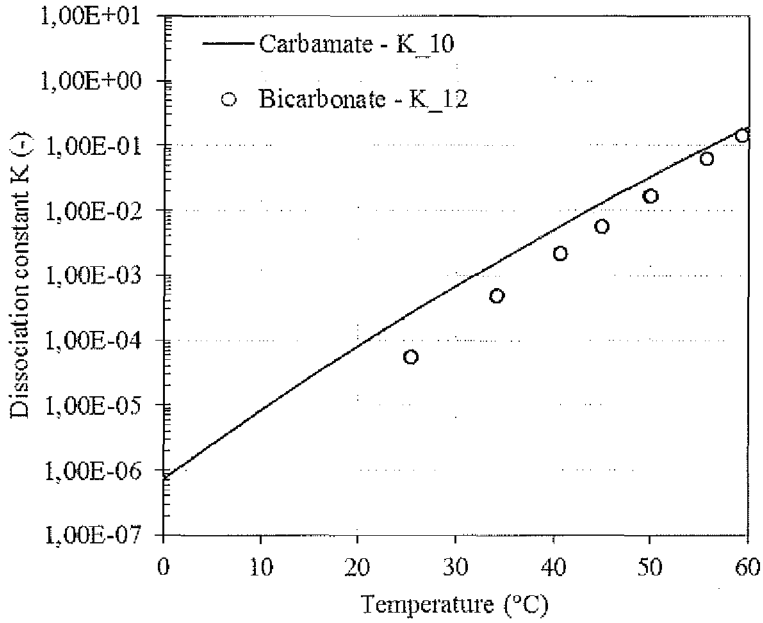
1,00E+01
1,00E+00
1,00E-01
1,00E-02
1,00E-03
1,00E-04
1,00E-05
1,00E-06
1,00E-07
0
10
20
30
40
50
60
Dissociation constant K (-)
Temperature (°C)
Carbamate - K_10
Bicarbonate - K_12

FIG. 3

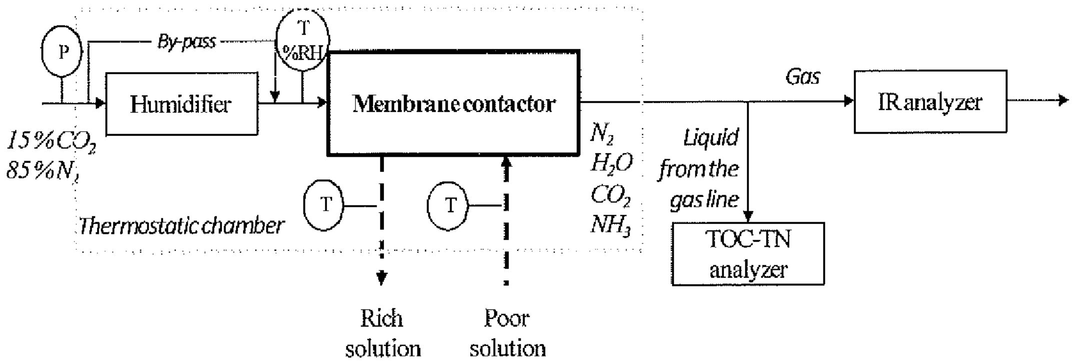
P
By-pass
T
%RH
Humidifier
Membrane contactor
15% $CO_2$
85% $N_2$
Thermostatic chamber
T
T
$N_2$
$H_2O$
$CO_2$
$NH_3$
Gas
IR analyzer
Liquid
from the
gas line
TOC-TN
analyzer
Rich
solution
Poor
solution

FIG. 4

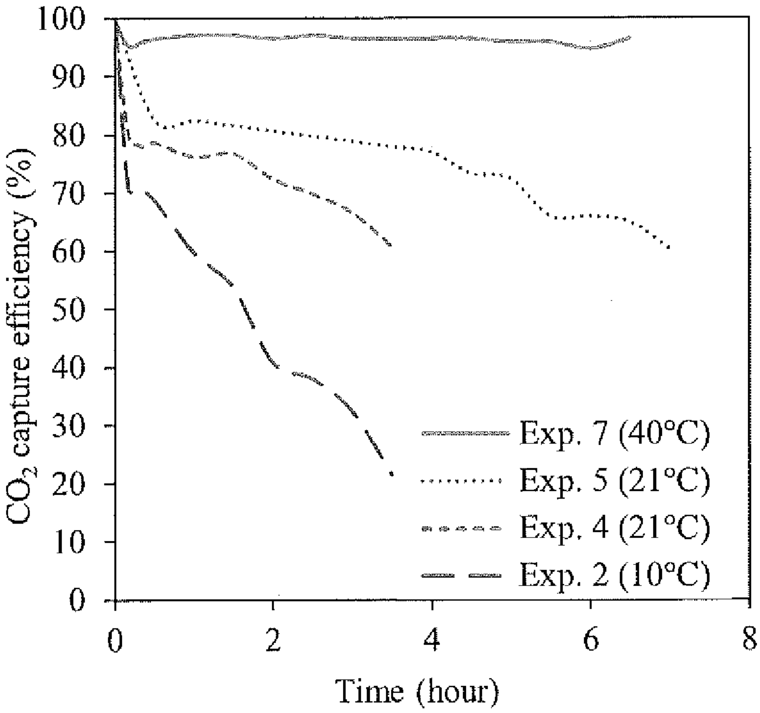
100
90
80
70
60
50
40
30
20
10
0
$CO_2$ capture efficiency (%)
0
2
4
6
8
Time (hour)
Exp. 7 (40°C)
Exp. 5 (21°C)
Exp. 4 (21°C)
Exp. 2 (10°C)

FIG. 5 (a)

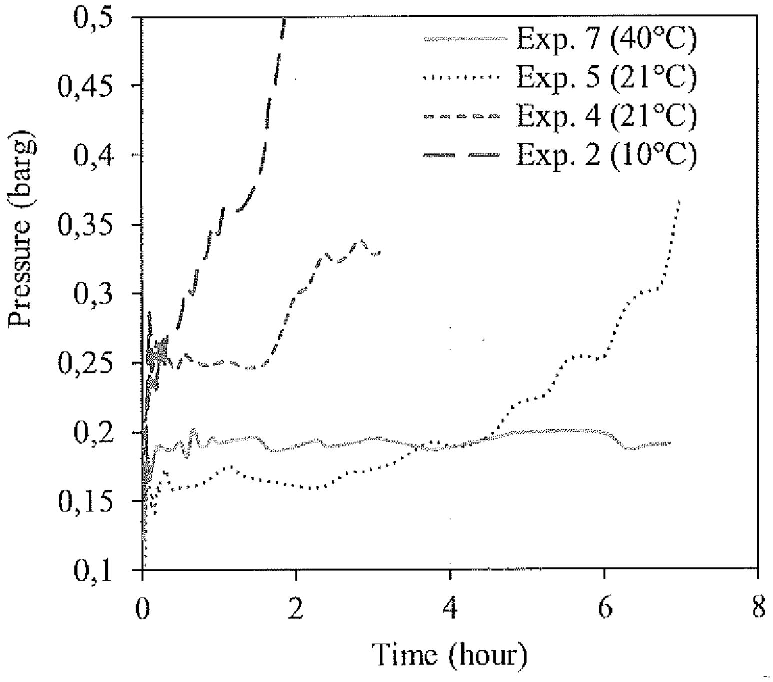
0,5
0,45
0,4
0,35
0,3
0,25
0,2
0,15
0,1
Pressure (barg)
0
2
4
6
8
Time (hour)
Exp. 7 (40°C)
Exp. 5 (21°C)
Exp. 4 (21°C)
Exp. 2 (10°C)

FIG. 5 (b)

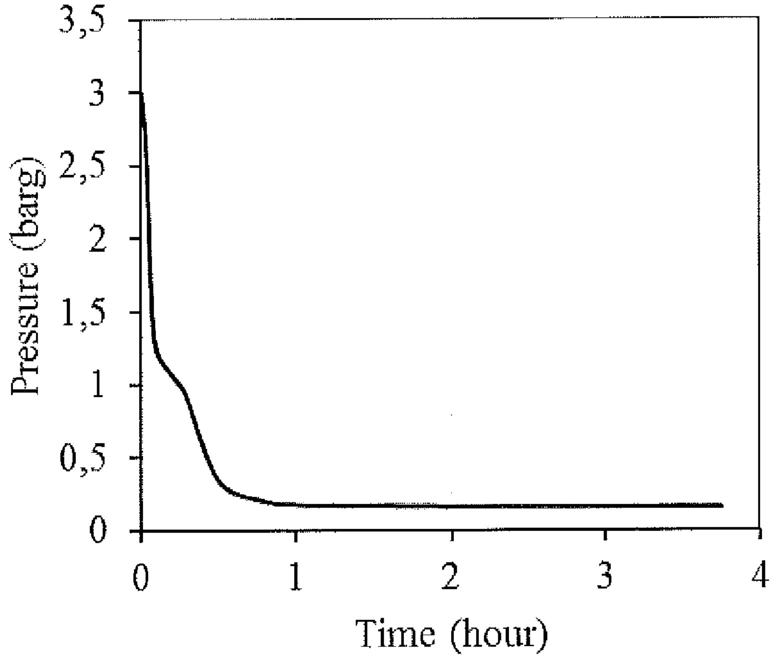


FIG. 6

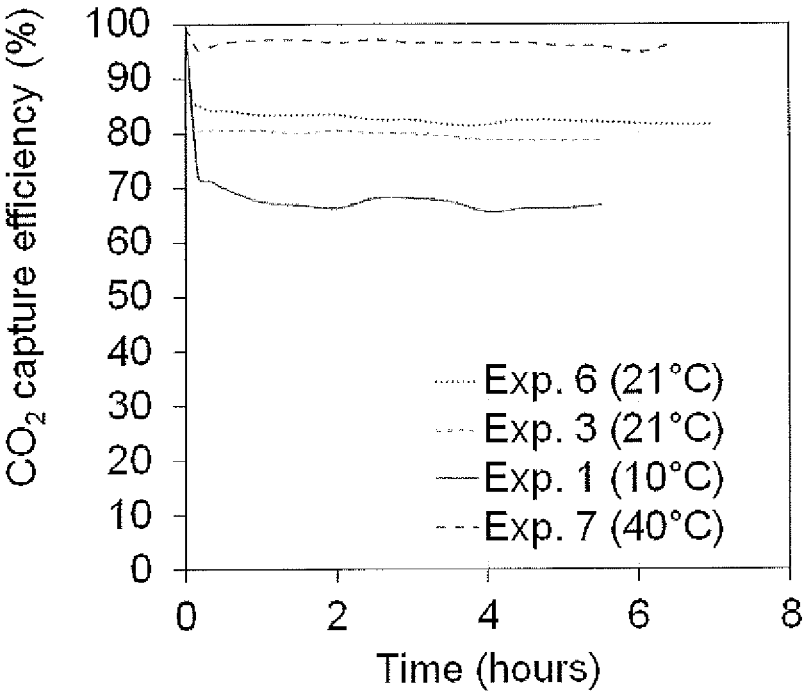

100
90
80
70
60
50
40
30
20
10
0
$CO_2$ capture efficiency (%)
0
2
4
6
8
Time (hours)
Exp. 6 (21°C)
Exp. 3 (21°C)
Exp. 1 (10°C)
Exp. 7 (40°C)


Fig. 7 (a)

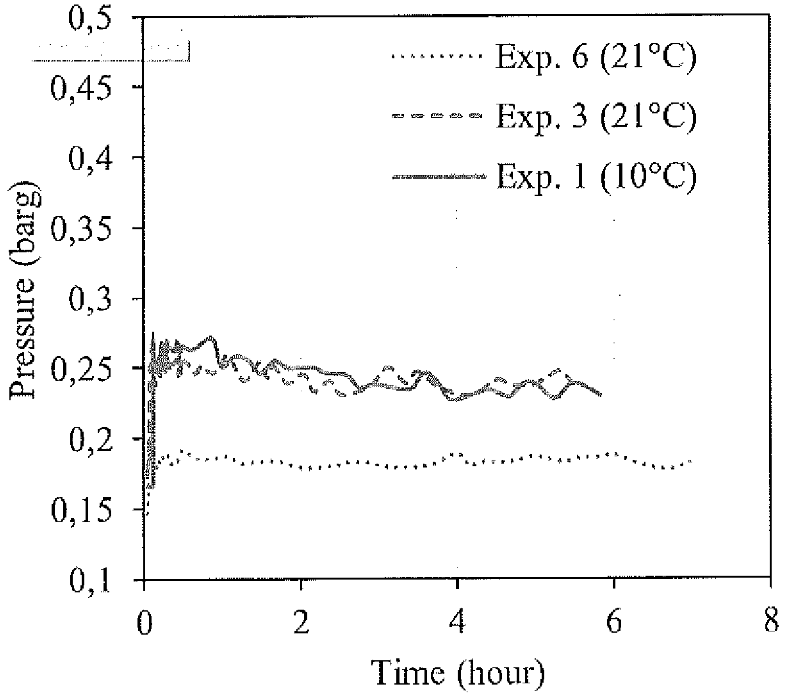

0,5
0,45
0,4
0,35
0,3
0,25
0,2
0,15
0,1
Pressure (barg)
0
2
4
6
8
Time (hour)
Exp. 6 (21°C)
Exp. 3 (21°C)
Exp. 1 (10°C)


Fig. 7 (b)

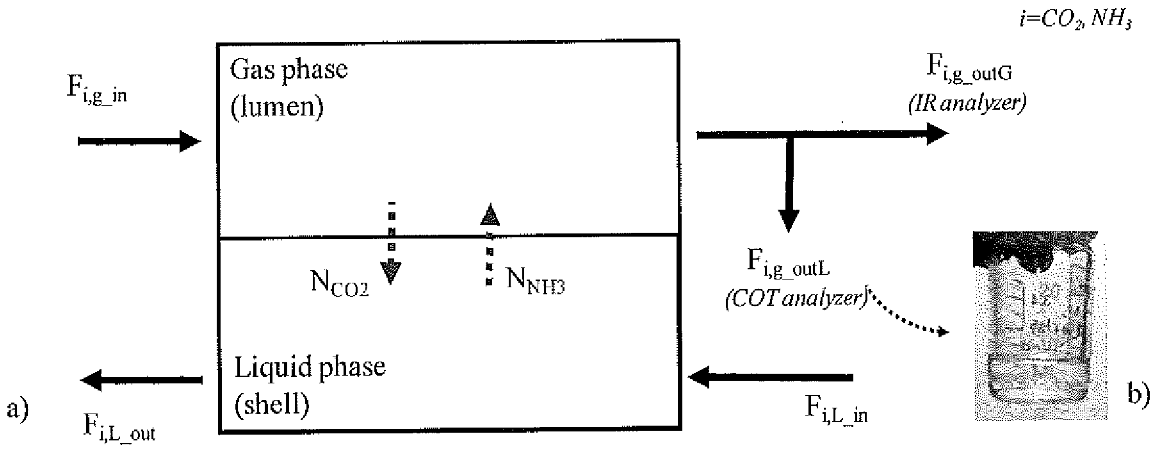
i=CO2, NH3
Fi,g_in
Gas phase
(lumen)
Fi,g_outG
(IR analyzer)
NCO2
NNH3
Fi,g_outL
(COT analyzer)
Liquid phase
(shell)
a)
Fi,L_out
Fi,L_in
b)

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 2993787 A
- US 20080276803 A


### Non-patent literature cited in the description


- CRC Handbook of Chemistry and Physics. CRC Press, 2005, 6-8
- World Meteorological Organization, The state of greenhouse gases in the atomosphere based on global observations. *Greenh. Gas Bull.,* 2014, 1-17
- *International Energy Agency, Technology Roadmap, SpringerReference,* 2013, vol. 59
- **A.S. BHOWN ; B.C. FREEMAN.** Analysis and status of post-combustion carbon dioxide capture technologies. *Environ. Sci. Technol.,* 2011, vol. 45, 8624-8632
- **P. CORP ; P. CORP ; I. DRIVE.** *Testing of Ammonia Based CO 2 Capture with Multi-Pollutant Control Technology,* 2008
- **G. LOMBARDO ; R. AGARWAL ; J. ASKANDER.** Chilled Ammonia Process at Technology Center Mongstad - First Results. *Energy Procedia,* 2014, vol. 51, 31-39
- **K. HAN ; C.K. AHN ; M.S. LEE ; C.H. RHEE ; J.Y. KIM ; H.D. CHUN.** Current status and challenges of the ammonia-based CO2 capture technologies toward commercialization. *Int. J. Greenh. Gas Control.,* 2013, vol. 14, 270-281
- *General Elecric, Improvement of GE Power' s Chilled Ammonia Process using Membrane Technology,* 2016
- **E. FAVRE ; H.F. SVENDSEN.** Membrane contactors for intensified post-combustion carbon dioxide capture by gas-liquid absorption processes. *J. Memb. Sci.,* 2012, vol. 407-408, 1-7
- **A. GABELMAN ; S.-T. HWANG.** Hollow fiber membrane contactors. *J. Memb. Sci.,* 1999, vol. 159, 61-106
- **R. WANG ; H.Y. ZHANG ; P.H.M. FERON ; D.T. LIANG.** Influence of membrane wetting on CO2 capture in microporous hollow fiber membrane contactors. *Sep. Purif. Technol.,* 2005, vol. 46, 33-40
- **E. CHABANON ; D. ROIZARD ; E. FAVRE.** Membrane contactors for postcombustion carbon dioxide capture: A comparative study of wetting resistance on long time scales. *Ind. Eng. Chem. Res.,* 2011, vol. 50, 8237-8244
- **A. MCLEOD ; P. BUZATU ; O. AUTIN ; B. JEFFERSON ; E. MCADAM.** Controlling shell-side crystal nucleation in a gas-liquid membrane contactor for simultaneous ammonium bicarbonate recovery and biogas upgrading. *J. Memb. Sci.,* 2015, vol. 473, 146-156
- **A. MCLEOD ; B. JEFFERSON ; E.J. MCADAM.** Biogas upgrading by chemical absorption using ammonia rich absorbents derived from wastewater. *Water Res.,* 2014, vol. 67, 175-186
- **C. MAKHLOUFI ; E. LASSEUGUETTE ; J.C. REMIGY ; B. BELAISSAOUI ; D. ROIZARD ; E. FAVRE.** Ammonia based CO2 capture process using hollow fiber membrane contactors. *J. Memb. Sci.,* 2014, vol. 455, 236-246
- **C. MAKHLOUFI.** *Etude expérimentale et modelisation d'un procédé de captage du CO2 en postcombustion par l'ammoniaque a l'aide de contacteurs membranaires: du matériau a l'évaluation de l'intensification de l'absorption.,* 2013
- **M. MEHDIPOUR ; P. KESHAVARZ ; A. SERAJI ; S. MASOUMI.** Performance analysis of ammonia solution for CO2 capture using microporous membrane contactors. *Int. J. Greenh. Gas Control.,* 2014, vol. 31, 16-24
- **H. YU ; S. MORGAN ; A. ALLPORT ; A. COTTRELL ; T. DO ; J. MCGREGOR ; L. WARDHAUGH ; P. FERON.** Results from trialling aqueous NH3 based post-combustion capture in a pilot plant at Munmorah power station: Absorption. *Chem. Eng. Res. Des.,* 2011, vol. 89, 1204-1215
- **C. MAKHLOUFI ; D. ROIZARD ; E. FAVRE.** Reverse selective NH3/CO2 permeation in fluorinated polymers using membrane gas separation. *J. Memb. Sci.,* 2013, vol. 441, 63-72
- **V. DARDE ; K. THOMSEN ; W.J.M. VAN WELL ; E.H. STENBY.** Chilled ammonia process for CO2 capture. *Int. J. Greenh. Gas Control.,* 2010, vol. 4, 131-136
- **X. LI ; E. HAGAMAN ; C. TSOURIS ; J.W. LEE.** Removal of carbon dioxide from flue gas by ammonia carbonation in the gas phase. *Energy and Fuels,* 2003, vol. 17, 69-74

- **KIRK OTHMER.** Kirk _Othmer encyclopedia of chemical Engineering. 1992
- **ULLMANN.** Ullman's encyclopedia of industrial chemistry. 1985
- **E.P. EGAN ; J.E. POTTS ; G.D. POTTS.** Dissociation Pressure of Ammonium Carbamate. *Ind. Eng. Chem.,* 1946, vol. 38, 454-456
- **M.J. JONCICH ; B.H. SOLKA ; J.E. BOWER.** Thermodynamic Properties of Ammonium Carbamate. *J. Chem. Ed.,* 1967, vol. 44, 598
- **G. QI ; S. WANG ; H. YU ; L. WARDHAUGH ; P. FERON ; C. CHEN.** Development of a rate-based model for CO2 absorption using aqueous NH3 in a packed column. *Int. J. Greenh. Gas Control.,* 2013, vol. 17, 450-461
- **A. HASANOĜLU ; J. ROMERO ; B. PEREZ ; A. PLAZA.** Ammonia removal from wastewater streams through membrane contactors: Experimental and theoretical analysis of operation parameters and configuration. *Chem. Eng. J.,* 2010, vol. 160, 530-537